# EUROPEAN PATENT SPECIFICATION

(11) **EP 4 574 576 B1**
(45) Date of publication and mention of the grant of the patent: **26.08.2026**
(21) Application number: 24178635.9
(22) Date of filing: 28.05.2024
(51) Int. Cl.: B60R 9/10

(54) **BIKE RACK FOR VEHICLE**
FAHRRADTRÄGER FÜR EIN FAHRZEUG
PORTE-VÉLO POUR VÉHICULE

(30) Priority: 18.12.2023 CN 202311735791
(43) Date of publication of application: 25.06.2025
(73) Proprietor: Ningbo Chenfan Auto Accessories Co., Ltd., Ningbo, Zhejiang 315300 (CN)
(72) Inventor: HUO, Shouguang, Ningbo, 315300 (CN)
(74) Representative: Cabinet Chaillot

(56) References cited:
- CN-A- 116 061 818
- CN-U- 216 359 940
- DE-A1- 10 309 327
- DE-A1- 102009 039 822
- US-A1- 2013 062 383

## Description

### TECHNICAL FIELD

The present disclosure relates to the technical field of bike racks, and in particular to a bike rack for a vehicle.

### BACKGROUND

A bike rack is a device that is mounted at the rear of a vehicle to carry a bike.

In the prior art, Chinese utility model patent CN219406317U discloses a load rack for a vehicle, including a platform support unit, where the platform support unit is configured to support at least one bike. The platform support unit includes at least one wheel receiving member for receiving at least one wheel of the at least one bike, so as to, for example, laterally support the bike. The platform support unit further includes at least one bike support arm member, and the at least one bike support arm member is configured to hold and secure the at least one bike when the at least one bike is received by the at least one wheel receiving member. The at least one bike support arm member is reconfigurable between a bike support state and a bike loading state. However, the wheel receiving member of the load rack is rotatably connected to the bike support arm member through the same shaft, which requires high strength for the shaft and results in high production costs. DE10309327A1 discloses an accommodation device pivotable between retracted and deployed positions and pivotably mounted on the vehicle structure via a pivot lever. The accommodation device protrudes approximately horizontally from the outside of the vehicle in the operating position. The accommodation device can be mounted on the vehicle by two pivot levers. DE102009039822A1 discloses a fastening device for bicycle carrier. US2013/062383A1 discloses a vehicle-mountable bicycle carrier. The vehicle-mountable bicycle carrier includes a linkage device for mounting the carrier to a vehicle, a base portion or platform to support both wheels of a bicycle, and an arm assembly connected to the base portion. However, they fail to disclose a solution where the wheel receiving arm and the support arm avoid sharing the same shaft. CN216359940U discloses an automobile tailstock for placing a bicycle. The automobile tailstock comprises a main support frame, and a wheel limiting group and a bicycle body positioning piece which are arranged on the main support frame, the main support frame comprises a bicycle connecting rod, a middle rod and a cross rod, a first folding assembly is arranged between the bicycle connecting rod and one end of the middle rod, and a second folding assembly is arranged between the middle rod and the cross rod. A first folding assembly is arranged between the bicycle connecting rod and the middle rod so that the bicycle connecting rod and the middle rod can be in a first folding state and a first using state, the cross rod comprises two side rods arranged on the two sides of the middle rod respectively, and second folding assemblies are arranged between the two side rods and the middle rod respectively so that the cross rod can be in a second folding state and a second using state.

### SUMMARY

An objective of the present application is to provide a bike rack for a vehicle, aiming to reduce the requirement for the strength of the rotating shaft and lower the costs.

The present disclosure adopts the following technical solution. A bike rack for a vehicle includes:
wheel receiving arms, configured to receive at least one wheel of at least one bike;
a support arm, configured to support the bike; and
a base, configured to provide a mounting position for the wheel receiving arms and the support arm; and
where, the wheel receiving arms are provided in pairs on two sides of the base, and there is at least one pair of wheel receiving arms; the wheel receiving arms and the support arm are rotatably connected to the base through separate shafts, such that the wheel receiving arms each are rotatably connected to the base through a rotating rod and the support arm is rotatably connected to the base through a rotating shaft, wherein the support arm includes a sleeve; the rotating shaft is provided on the base; and the sleeve is rotatably sleeved on the rotating shaft. A rotation axis of the rotating shaft is parallel to rotation axes of the rotating rods.

Compared to the prior art, the present application has the following advantages. The wheel receiving arm is rotatably connected to the base, allowing the wheel receiving arm to be rotated and folded, reducing the storage volume and saving storage space. The support arm is rotatably connected to the base, and the angle of the support arm is adjustable, making it suitable for different sizes of bikes and expanding the scope of application. The wheel receiving arm and the support arm are rotatably connected to the base through the rotating rod and the rotating shaft, respectively, so that the wheel receiving arm and the support arm avoid sharing the same shaft, which facilitates the mounting of the wheel receiving arm and the support arm. Compared to a solution of sharing the same shaft, the present application reduces the strength requirements for the rotating rod and the rotating shaft, reduces material usage, simplifies assembly, reduces production costs, facilitates later maintenance and replacement, and improves product competitiveness. The sleeve fits with the rotating shaft, making the support arm feature convenient angle adjustment, simple and reliable structure, easy processing, and low cost.

In some embodiments of the present application, a wear-resistant sleeve is provided between the sleeve and the rotating shaft; the wear-resistant sleeve is fixedly connected to the rotating shaft; the sleeve is rotatably sleeved on the wear-resistant sleeve; an inner wall of the wear-resistant sleeve is provided with a reinforcing rib; and an end of the wear-resistant sleeve is provided with a radially protruding stop ring.

In some embodiments of the present application, the base includes a main frame connected to a vehicle and side frames symmetrically provided on two sides of the main frame; the main frame is rotatably connected to the side frames through a first rotating shaft; the bike rack for the vehicle further includes a bias locking mechanism, and the bias locking mechanism is configured to lock the side frame; the bias locking mechanism is provided on at least one side frame; the bias locking mechanism includes a locking element configured to extend and retract relative to the side frame and a toggle element configured to control the locking element to extend and retract; the locking element is provided at an end of the side frame and protrudes outward; the main frame is provided with a fixing pin that extends outward; the fixing pin fits with the locking element; and the toggle element is connected to the locking element through a transmission assembly.

Further, the transmission assembly includes a transmission rod and a guide sleeve; the guide sleeve includes a first side wall provided at an end of the side frame; a portion of the locking element is provided on the first side wall in a penetrating manner; the locking element is connected to the toggle element through the transmission rod; the guide sleeve further includes a second side wall provided in the side frame; the locking element is provided with a connecting rod oriented towards an interior of the side frame; a portion of the connecting rod is provided on the second side wall in a penetrating manner; an end of the connecting rod is connected to the transmission rod; a first reset spring is sleeved on the connecting rod; an internal cavity is formed between the first side wall and the second side wall; the first reset spring is provided over the internal cavity; and two ends of the first reset spring respectively abut against the locking element and the second side wall.

Further, the toggle element and the locking element are respectively provided on two sides of the first rotating shaft; the toggle element includes a pedal and a connecting plate; the connecting plate is rotatably connected to the side frame through a second rotating shaft; the connecting plate is connected to the locking element through the transmission assembly; a joint between the connecting plate and the transmission assembly and the pedal are located on two sides of the second rotating shaft, respectively; a gap is provided at a bottom of the side frame; a portion of the connecting plate extends into the side frame through the gap; in a reset state of the pedal, a side of the connecting plate abuts against a side of the gap; the bottom of the side frame is provided with a mounting port; and the mounting port is communicated with the gap.

Further, an end of each of the two side frames away from the locking element is provided with a connecting element; the connecting element is configured to connect the two side frames; a second reset spring is provided between the connecting element and the connecting plate; two ends of the second reset spring are connected to the connecting element and the connecting plate, respectively; a reinforcing plate is provided between the two side frames; the reinforcing plate is located on an upper surface of the side frame; the reinforcing plate abuts against the main frame when the locking element fits with the fixing pin; a first limiting rod is provided between the two side frames; and a rotation path of the first limiting rod around the first rotating shaft intersects with the main frame.

**In** some embodiments of the present application, the support arm includes a support frame, an extension frame, and an extension frame locking mechanism; a bottom of the support frame is connected to the base; the extension frame is movably provided on the support frame in a penetrating manner; the extension frame locking mechanism includes a fixed seat and a manual limiting member; the fixed seat is sleeved on the support frame; the manual limiting member is movably connected to the fixed seat; in a first state, the manual limiting member prevents the extension frame from moving up and down relative to the support frame; and in a second state, the extension frame is movable up and down relative to the support frame.

Further, the extension frame is provided with a fixing strip; a limiting element is provided between the manual limiting member and the fixing strip; the fixing strip is provided with a first limiting groove that fits with the limiting element; the limiting element and the manual limiting member are split structures; the support frame is provided with a first through hole; the limiting element is provided in the first through hole in a penetrating manner; an abutting element is provided between the limiting element and the manual limiting member; the fixed seat is provided with a guide channel; the guide channel is concentric with the first through hole; the abutting element is movably provided on the guide channel in a penetrating manner; and two ends of the abutting element abut against the manual limiting member and the limiting element, respectively.

Further, a cross-section of the extension frame includes a bottom edge, a top edge, and first side edges symmetrically provided on two sides of the bottom edge; two ends of the bottom edge are respectively connected to bottom ends of the first side edges on the two sides; the first side edges are inclined outward; top ends of the first side edges are connected to the top edge; two sides of the top edge are symmetrically provided with second side edges; two ends of the top edge are respectively connected to bottom ends of the second side edges on the two sides; the second side edges are inclined inward; top ends of the second side edges are respectively connected to the top ends of the first side edges; a highest point of the top edge is lower than the top ends of the first side edges; the top edge is parallel to the bottom edge; the top edge and the second side edges enclose a mounting cavity; and the fixing strip is provided in the mounting cavity.

**In** some embodiments of the present application, the bike rack for a vehicle further includes a sliding push plate; the sliding push plate is configured to connect the wheel receiving arm to a ground; an end of the wheel receiving arm is provided with a receiving cavity; the receiving cavity is provided with a connecting piece; the connecting piece is configured to extend and retract relative to the receiving cavity; the sliding push plate is provided with a connecting structure that fits with the connecting piece; and when the sliding push plate is connected to the wheel receiving arm, the sliding push plate forms a ramp.

Further, the connecting piece is provided with a second limiting groove and a connecting hook; the connecting structure includes a first buckle slot; the first buckle slot is located at an end of the sliding push plate and fits with the connecting hook; the receiving cavity is provided with a second limiting rod; the second limiting rod is provided on the second limiting groove in a penetrating manner; when a side wall of the second limiting groove away from the connecting hook abuts against the second limiting rod, the connecting hook extends out of the wheel receiving arm; and when a side wall of the second limiting groove adjacent to the connecting hook abuts against the second limiting rod, the connecting hook is received into the wheel receiving arm.

Further, the sliding push plate includes a push-up plate and at least one extension plate; the push-up plate and an adjacent extension plate are connected by a connecting assembly; the first buckle slot is provided on the push-up plate; the connecting assembly includes a fixing element and a fastening element that fit with each other for locking; the push-up plate is provided with a first mounting hole or mounting slot; the extension plate is provided with second mounting holes; the fixing element is provided on the first mounting hole or mounting slot and the second mounting holes in a penetrating manner; the push-up plate and the extension plate are fixedly connected by the fastening element; the second mounting holes are respectively provided at two ends of the extension plate; and an adjustment slot is provided between the two second mounting holes.

### BRIEF DESCRIPTION OF THE DRAWINGS

FIG. 1 is a first structural diagram of a bike rack for a vehicle according to Embodiment 1 of the present disclosure;
FIG. 2 is a first structural diagram of the bike rack for a vehicle with a shell removed according to Embodiment 1 of the present disclosure;
FIG. 3 is an exploded view of a sleeve mounting structure of the bike rack for a vehicle according to Embodiment 1 of the present disclosure;
FIG. 4 is a detail of A shown in FIG. 2;
FIG. 5 is a structural diagram of a wear-resistant sleeve of the bike rack for a vehicle according to Embodiment 1 of the present disclosure;
FIG. 6 is a second structural diagram of the bike rack for a vehicle according to Embodiment 1 of the present disclosure;
FIG. 7 is a second structural diagram of the bike rack for a vehicle with the shell removed according to Embodiment 1 of the present disclosure;
FIG. 8 is a top view of the bike rack for a vehicle according to Embodiment 1 of the present disclosure;
FIG. 9 is a section view, taken along B-B after rotation, of the bike rack for a vehicle shown in FIG. 8;
FIG. 10 is a section view, taken along C-C after rotation, of the bike rack for a vehicle shown in FIG. 8;
FIG. 11 is a detail of D shown in FIG. 9;
FIG. 12 is a detail of E shown in FIG. 9;
FIG. 13 is a detail of F shown in FIG. 6;
FIG. 14 is a detail of G shown in FIG. 6;
FIG. 15 is a detail of H shown in FIG. 10;
FIG. 16 is a structural diagram of a locking element of the bike rack for a vehicle according to Embodiment 1 of the present disclosure;
FIG. 17 is a detail of J shown in FIG. 9;
FIG. 18 is a detail of K shown in FIG. 9;
FIG. 19 is a detail of L shown in FIG. 9;
FIG. 20 is a structural diagram of an extension frame of the bike rack for a vehicle according to Embodiment 1 of the present disclosure;
FIG. 21 is a structural diagram of a support frame of the bike rack for a vehicle according to Embodiment 1 of the present disclosure;
FIG. 22 is a structural diagram of the bike rack for a vehicle with a sliding push plate assembled according to Embodiment 1 of the present disclosure;
FIG. 23 is a section view of the bike rack for a vehicle with the sliding push plate assembled according to Embodiment 1 of the present disclosure;
FIG. 24 is a third structural diagram of the bike rack for a vehicle according to Embodiment 1 of the present disclosure;
FIG. 25 is a first structural diagram of a connecting piece of the bike rack for a vehicle according to Embodiment 1 of the present disclosure;
FIG. 26 is a second structural diagram of the connecting piece of the bike rack for a vehicle according to Embodiment 1 of the present disclosure;
FIG. 27 is a structural diagram of the sliding push plate of the bike rack for a vehicle according to Embodiment 1 of the present disclosure;
FIG. 28 is a detail of M shown in FIG. 23;
FIG. 29 is a detail of N shown in FIG. 24; and
FIG. 30 is a detail of O shown in FIG. 23.

### DETAILED DESCRIPTION OF THE EMBODIMENTS

To further describe the technical means adopted by the present disclosure to achieve the intended purpose and the effects of the technical means, the specific implementations, structures, features, and effects of the present disclosure are described in detail below with reference to the drawings and preferred embodiments.

### Embodiment 1

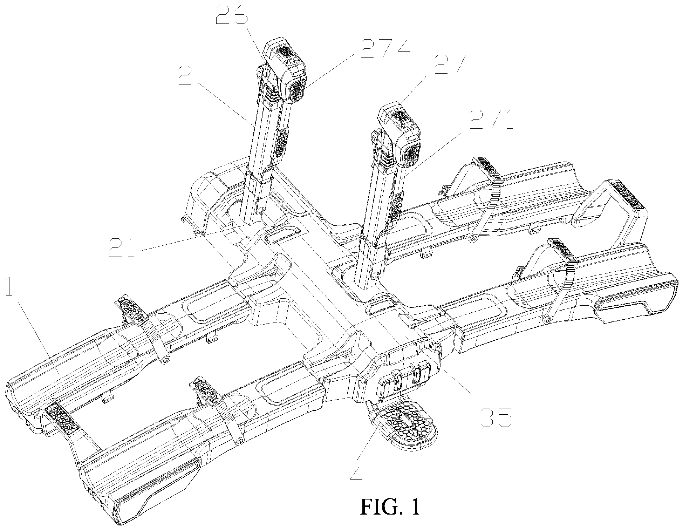

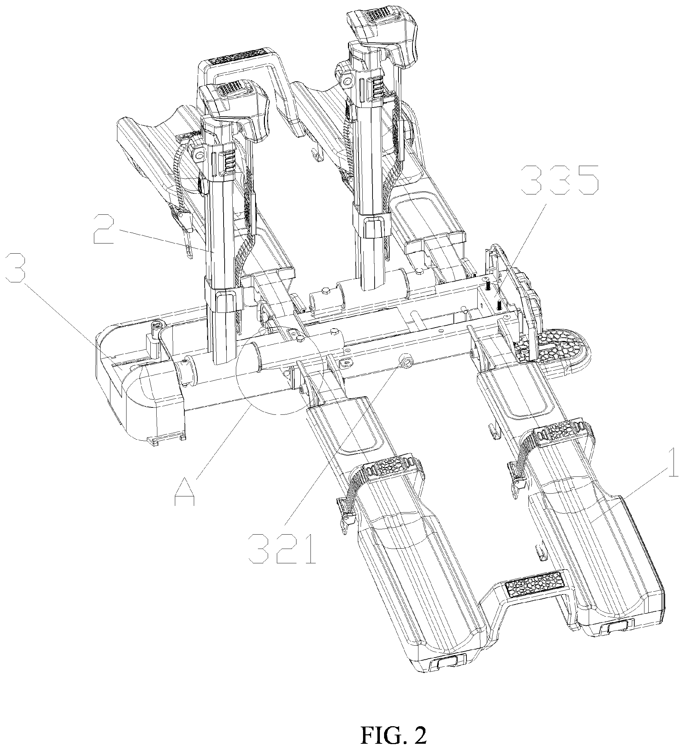

This embodiment provides a bike rack for a vehicle. As shown in FIGS. 1, 2, and 4, the components of the bike rack for a vehicle are described as follows.

Wheel receiving arms 1 are configured to receive at least one wheel of at least one bike.

Support arm 2 is configured to support the bike.

Base 3 is configured to provide a mounting position for the wheel receiving arms 1 and the support arm 2.

The wheel receiving arms 1 are provided in pairs on two sides of the base 3, and there is at least one pair of wheel receiving arms. The wheel receiving arm 1 is rotatably connected to the base 3 through rotating rod 11. The support arm 2 is rotatably connected to the base 3 through rotating shaft 31. The support arm 2 includes sleeve 21. The rotating shaft 31 is provided on the base 3. The sleeve 21 is rotatably sleeved on the rotating shaft 31.

The wheel receiving arm 1 is rotatably connected to the base 3, allowing the wheel receiving arm 1 to be rotated and folded, reducing the storage volume and saving storage space. The support arm 2 is rotatably connected to the base 3, and the angle of the support arm 2 is adjustable, making it suitable for different sizes of bikes and expanding the scope of application. The wheel receiving arm 1 and the support arm 2 are rotatably connected to the base 3 through the rotating rod 11 and the rotating shaft 31, respectively. That is, the wheel receiving arm 1 and the support arm 2 avoid sharing the same shaft, which facilitates the mounting of the wheel receiving arm 1 and the support arm 2. Compared to a solution of sharing the same shaft, the present application reduces the strength requirements for the rotating rod 11 and the rotating shaft 31, reduces material usage, simplifies assembly, reduces production costs, facilitates later maintenance and replacement, and improves product competitiveness. The sleeve 21 fits with the rotating shaft 31, making the support arm 2 feature convenient angle adjustment, simple and reliable structure, easy processing, and low cost. In this embodiment, the rotating rod 11 uses a bolt.

In order to achieve reliable rotation, projection of the rotating shaft 31 on a horizontal plane is parallel to projection of the rotating rod 11 on the horizontal plane, such that a rotation direction of the support arm 2 is parallel to a rotation direction of the wheel receiving arm 1. In this way, the support arm 2 will not collide with the wheel receiving arm 1 during storage, and meanwhile, the support arm 2 will not collide with the bike.

In order to ensure that each bike has a fixed support position, the number of the support arm 2 is the same as the pair number of the wheel receiving arms 1. Since the number of the support arm 2 is the same as the pair number of the wheel receiving arms 1, each bike is provided with one support arm 2 for fixed support, ensuring the fixation safety of the bike.

In order to increase the number of bikes carried, there are at least two pairs of wheel receiving arms 1. The support arms 2 are provided in a staggered manner along a length direction of the wheel receiving arms 1. In this embodiment, the two pairs of wheel receiving arms 1 can hold two bikes simultaneously. The staggered arrangement of the support arms 2 allows the bikes to be stacked compactly, reducing the space occupied after stacking.

In order to ensure the reliable rotation of the support arm 2, the base 3 is provided with fixing plate 34 protruding outward, and at least one end of the rotating shaft 31 is fixedly connected to the fixing plate 34 by a bolt. The fixing plate 34 is configured to mount and fix the rotating shaft 31, and the fixing plate 34 protrudes outward to facilitate the mounting of the rotating shaft 31.

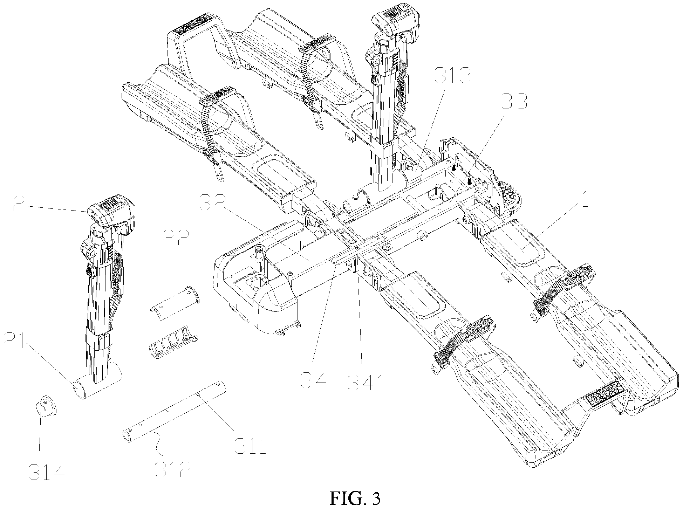

In order to ensure reliable mounting, as shown in FIG. 3, the fixing plate 34 is in an inverted U shape, with two open ends of the U shape fixedly connected to the base 3, and a bottom surface of the U shape recessed relative to the open ends. The bottom surface of the fixing plate 34 is provided with third through hole 341. The rotating shaft 31 is provided with second through hole 311 that fits with the third through hole 341. The second through hole 311 and the third through hole 341 are connected by a bolt. Specifically, a threaded plate in a cooperative connection with the bolt is provided between the fixing plate 34 and the base 3. The U-shaped fixing plate 34 has high structural strength. The bottom surface of the U shape is recessed relative to the open ends, which fits with an outer surface of the rotating shaft 31 to improve the fit between the rotating shaft 31 and the recess. The third through hole 341 and the second through hole 311 cooperate to facilitate the connection and fixation between the rotating shaft 31 and the fixing plate 34 by the bolt. There is space between the bottom surface of the U-shaped fixing plate 34 and the base 3, which facilitates the downward extension of the bolt.

In order to extend the service life, wear-resistant sleeve 22 is provided between the sleeve 21 and the rotating shaft 31, and the wear-resistant sleeve 22 is connected to the rotating shaft 31 through an elastic cylindrical pin. The sleeve 21 is rotatably sleeved on the wear-resistant sleeve 22. Compared to direct rotation wear between the sleeve 21 and the rotating shaft 31, in the present application, the wear-resistant sleeve 22 extends the service life of the sleeve 21, and the replacement of the support arm 2 is relatively simple. The sleeve 21 and the wear-resistant sleeve 22 are tightly fitted, allowing the support arm 2 to be fixed at any angle.

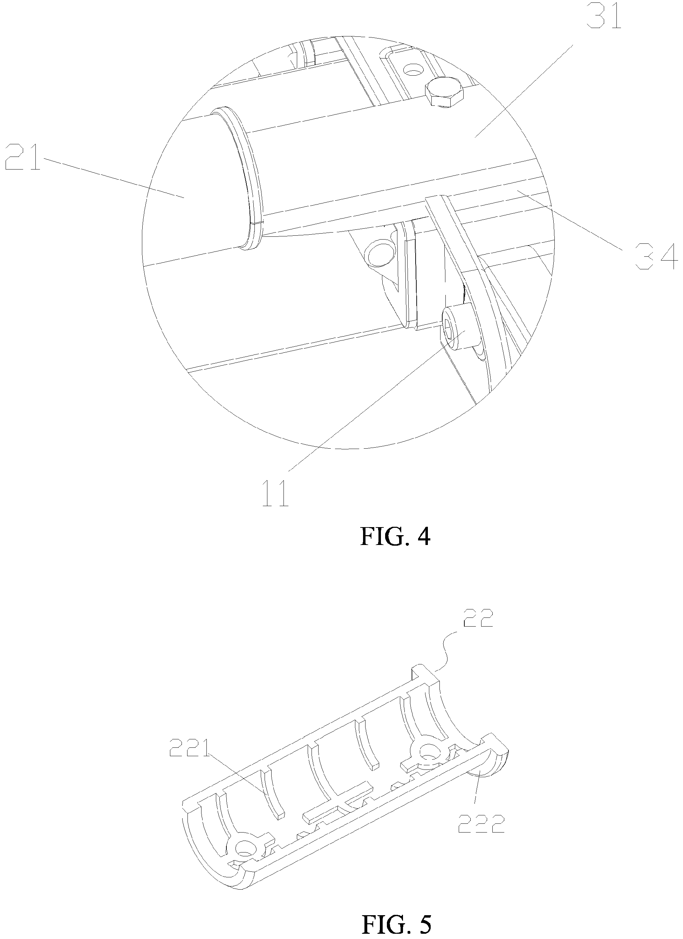

In order to improve the strength of the wear-resistant sleeve 22, as shown in FIG. 5, an inner wall of the wear-resistant sleeve 22 is provided with reinforcing rib 221. An end of the wear-resistant sleeve 22 is provided with radially protruding stop ring 222. A maximum diameter of the stop ring 222 is larger than an inner diameter of the sleeve 21 to ensure the reliable stopping function of the stop ring 222. The reinforcing rib 221 improves the overall strength of the wear-resistant sleeve 22. The stop ring 222 can abut against the sleeve 21 after an end of the wear-resistant sleeve 22 is inserted in place, which facilitates the positioning and mounting of the sleeve 21. The wear-resistant sleeve 22 adopts a symmetrical split design, which facilitates the mounting of the wear-resistant sleeve 22 and the rotating shaft 31, and the wear-resistant sleeve 22 can be fixedly connected to the rotating shaft 31 through a pin shaft.

In order to ensure the reliability of the base 3, the base 3 includes main frame 32 connected to a vehicle and side frames 33 symmetrically provided on two sides of the main frame 32. The main frame 32 is rotatably connected to the side frames 33 through first rotating shaft 321. The fixing plate 34 is provided on the side frame 33. In this embodiment, the main frame 32 and the side frames 33 are made of square tubes, which have high strength and low cost. The main frame 32 is connected to the vehicle, and a joint structure of the main frame 32 can be designed according to European or American standards. The side frames 33 are provided on the two sides of the main frame 32, such that the wheel receiving arms 1 on the two sides are provided on the side frames 33, respectively. The design facilitates the mounting of the wheel receiving arms 1, and increases the mounting space, making the mounting convenient. The main frame 32 and the side frames 33 are rotatable relative to each other, allowing the main frame 32 to maintain a connected state with the vehicle. By rotating the side frames 33, the bike can be biased, which facilitates opening the trunk of the vehicle.

In order to ensure the reliable mounting of the rotating shaft 31, the rotating shaft 31 includes first rotating shaft 312 closest to a side of the main frame 32 connected to the vehicle, and second rotating shaft 313 on the other side. An end of the first rotating shaft 312 closest to the side of the main frame 32 connected to the vehicle is provided with detachment prevention cover 314, and the other end of the first rotating shaft 312 is fixedly connected to the fixing plate 34 through two bolts. The second rotating shaft 313 is provided between two wheel receiving arms 1 on the same side. A maximum diameter of the detachment prevention cover 314 is larger than the inner diameter of the sleeve 21 to ensure reliable detachment prevention. A side of the first rotating shaft 312 away from the vehicle is connected to the fixing plate 34. The detachment prevention cover 314 can prevent the sleeve 21 from detaching from the side of the first rotating shaft 312 adj acent to the vehicle, ensuring reliable mounting of the sleeve 21 on the first rotating shaft 312. The first rotating shaft 312 adopts a design with one side extending out, and the side frame 33 does not need to extend to the lower side of the other side of the first rotating shaft 312. The design saves material, reduces production costs, and reduces overall volume. Compared to a solution with the two side frames 33 extending out, the main frame 32 is easy to connect with the vehicle.

In order to ensure the reliable fixation of the second rotating shaft 313, two ends of the second rotating shaft 313 are connected to the fixing plate 34 by bolts. The two sides of the second rotating shaft 313 are connected to the fixing plate 34 to prevent the sleeve 21 from slipping out.

In order to improve the protection, the base 3 is provided with shell 35. The shell 35 is configured to shield the main frame 32 and the side frames 33, improving the aesthetic appearance.

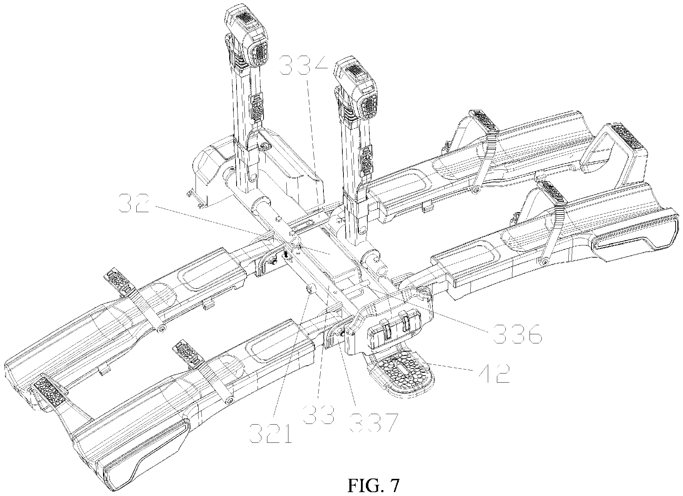

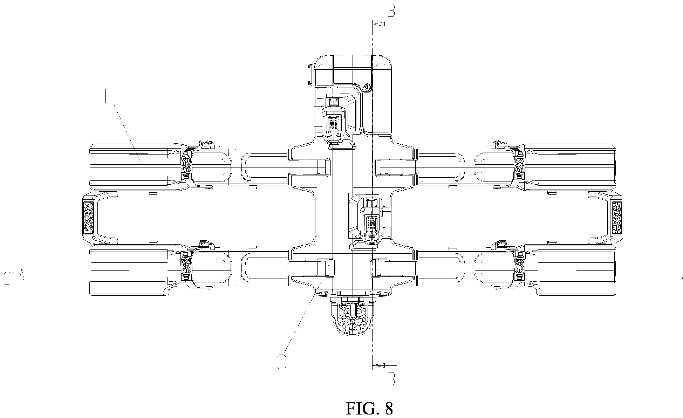

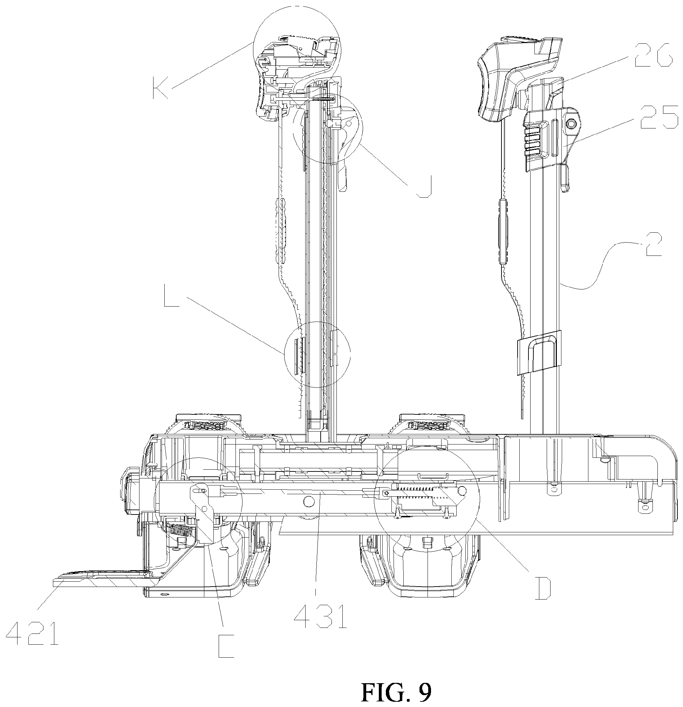

In order to ensure the reliability of biasing the bike, as shown in FIGS. 7, 8, 9, and 11, the bike rack for a vehicle further includes bias locking mechanism 4. The bias locking mechanism 4 is configured to lock the side frame 33. The bias locking mechanism 4 is provided on at least one side frame 33. The bias locking mechanism 4 includes locking element 41 configured to extend and retract relative to the side frame 33 and toggle element 42 configured to control the locking element 41 to extend and retract. The locking element 41 is provided at an end of the side frame 33 and protrudes outward. The main frame 32 is provided with fixing pin 322 that extends outward. The fixing pin 322 fits with the locking element 41. The toggle element 42 is connected to the locking element 41 through transmission assembly 43. In an extended state of the locking element 41, the fixing pin 322 is on a rotation path of the locking element 41. An upper surface of the side frame 33 is parallel to the horizontal plane. In this embodiment, the bias locking mechanism 4 is located on the two side frames 33. The wheel receiving arms 1 are provided in pairs on the side frames 33 on the two sides. In this embodiment, there are two pairs of wheel receiving arms 1. The locking element 41 is pulled and fits with the fixing pin 322 to form a disengaged or clamped state, allowing the side frame 33 to rotate with the wheel receiving arm 1 and the support arm 2 through the first rotating shaft 321.

The bias locking mechanism 4 is configured to lock the side frame 33 and prevent the wheel receiving arm 1 from biasing when there is no need to open the trunk of the vehicle. In the bias locking mechanism 4, the locking element 41 fits with the fixing pin 322, achieving a simple structure and reducing production costs. The toggle element 42 directly drives the locking element 41 through the transmission assembly 43, achieving simple control. In a specific implementation, the action of the toggle element 42 is transmitted to the locking element 41 through the transmission assembly 43. The locking element 41 retracts into the side frame 33, and the locking element 41 separates from the fixing pin 322, achieving an unlocking purpose and allowing the side frame 33 to rotate. At this point, an end of the side frame 33 away from the vehicle can be tilted, with one end downward and the other end upward, manually or through a bike weight, thereby achieving a tilting purpose and biasing the bike.

In order to ensure reliable transmission, the transmission assembly 43 includes transmission rod 431 and guide sleeve 432. The guide sleeve 432 includes first side wall 433 provided at an end of the side frame 33. A portion of the locking element 41 is provided on the first side wall 433 in a penetrating manner. The locking element 41 is connected to the toggle element 42 through the transmission rod 431. Through the connection of the transmission rod 431, the pushing and pulling forces of the toggle element 42 are transmitted to the locking element 41, ensuring reliable transmission. The guide sleeve 432 improves the strength of the end of the side frame 33. The first side wall 433 plays a role in blocking the end of the side frame 33, preventing external substances from entering the interior of the side frame 33 and improving the protection. Meanwhile, it also plays a role of guiding the extension and retraction of the locking element 41. Therefore, the guide sleeve 432 is easy to replace after wear, with low maintenance costs.

In order to ensure reliable transmission, the guide sleeve 432 further includes second side wall 434 provided in the side frame 33. The locking element 41 is provided with connecting rod 411 oriented towards an interior of the side frame 33. A portion of the connecting rod 411 is provided on the second side wall 434 in a penetrating manner. An end of the connecting rod 411 is connected to the transmission rod 431. The second side wall 434 enhances the internal strength of the side frame 33 and also serves as a guide for the connecting rod 411, ensuring reliable movement of the locking element 41.

In order to ensure the reliable locking of the locking element 41, first reset spring 412 is sleeved on the connecting rod 411. Internal cavity 435 is formed between the first side wall 433 and the second side wall 434. The first reset spring 412 is provided over the internal cavity 435. Two ends of the first reset spring 412 respectively abut against the locking element 41 and the second side wall 434. Through the first reset spring 412, the locking element 41 has a tendency to extend outward, ensuring reliable cooperation between the locking element 41 and the fixing pin 322.

In order to ensure reliable rotation, the toggle element 42 and the locking element 41 are respectively provided on two sides of the first rotating shaft 321. The toggle element 42 and the locking element 41 are arranged opposite each other on the two sides of the first rotating shaft 321. When the toggle element 42 is pressed down, the locking element 41 retracts, and one side of the locking element 41 tilts and biases. The design achieves smooth biasing and easy use.

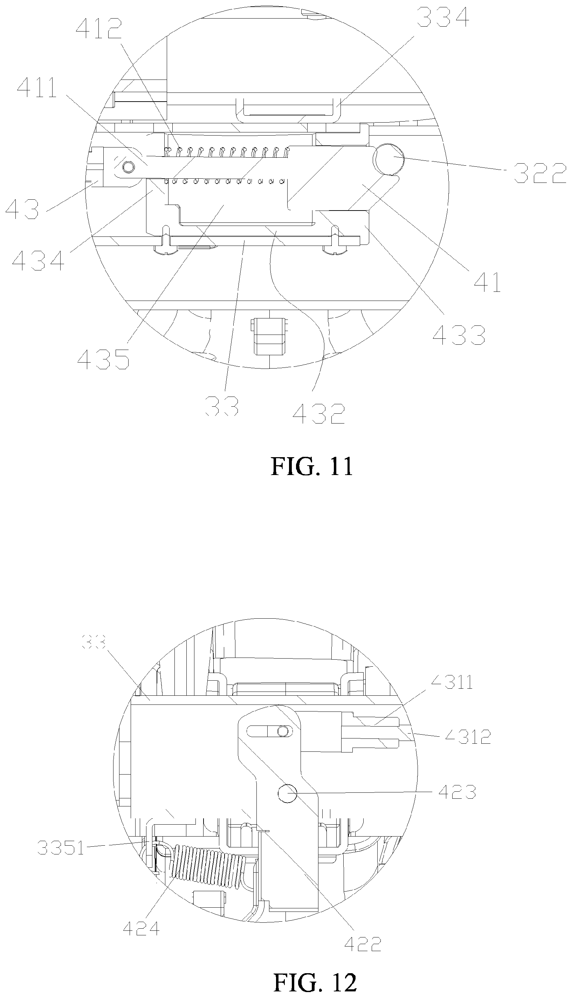

In order to ensure the reliable use of the toggle element 42, as shown in FIG. 12, the toggle element 42 includes pedal 421 and connecting plate 422. The connecting plate 422 is rotatably connected to the side frame 33 through second rotating shaft 423. The connecting plate 422 is connected to the locking element 41 through transmission assembly 43. A joint between the connecting plate 422 and the transmission assembly 43 and the pedal 421 are located on two sides of the second rotating shaft 423, respectively. The pedal 421 is convenient for stepping on. Compared to a solution of using hands, stepping on the pedal 421 with feet is more energy-efficient. Of course, the pedal 421 can be replaced by a pull rod, etc. The connecting plate 422 is configured to drive the transmission assembly 43. The pedal 421 and the joint between the connecting plate 422 and the transmission assembly 43 are located opposite each other on the two sides of the second rotating shaft 423, such that when stepping on the pedal 421, the connecting plate 422 rotates relatively, thereby pulling the transmission assembly 43.

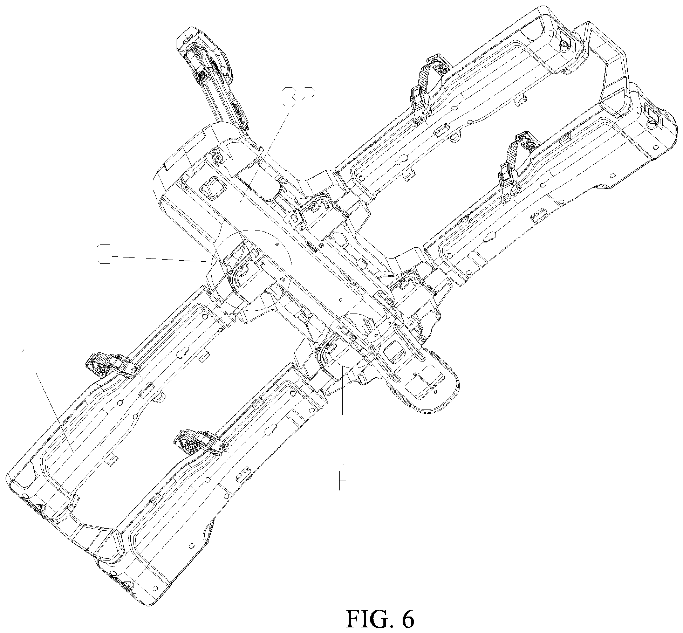

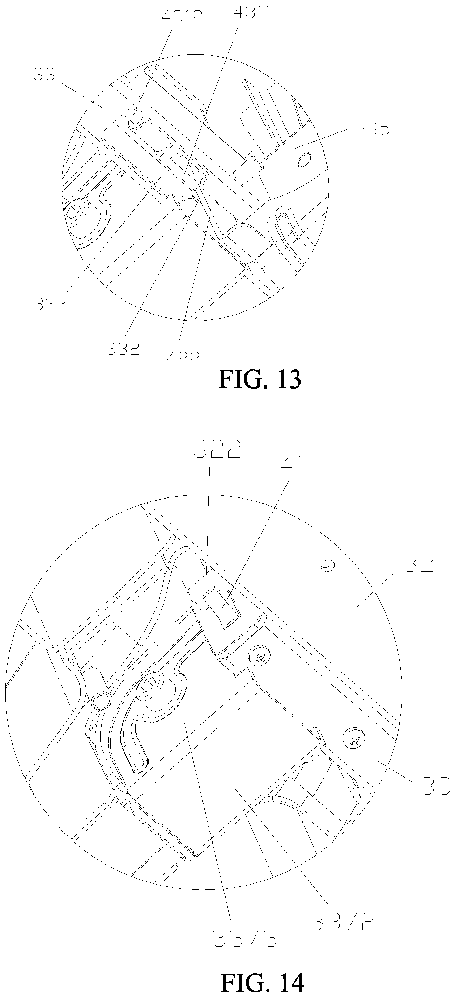

In order to ensure the reliable mounting and use of the connecting plate 422, as shown in FIGS. 6 and 13, gap 332 is provided at a bottom of the side frame 33. A portion of the connecting plate 422 extends into the side frame 33 through the gap 332. In a reset state of the pedal 421, a side of the connecting plate 422 abuts against a side of the gap 332. The gap 332 is provided for the connecting plate 422 to extend into the side frame 33, and plays a role in limiting the connecting plate 422, ensuring reliable resetting of the connecting plate 422.

In order to facilitate the observation of the interior of the side frame 33, the bottom of the side frame 33 is provided with mounting port 333. The mounting port 333 is communicated with the gap 332. The mounting port 333 is provided for the observation and maintenance of an internal component of the side frame 33.

In order to ensure synchronous movement of the two side frames 33, an end of each of the two side frames 33 away from the locking element 41 is provided with connecting element 335. The connecting element 335 is configured to connect the two side frames 33. The connecting element 335 enables synchronous movement between the two side frames 33 and improves the overall strength of the base 3.

In order to ensure the reliable resetting of the pedal 421, second reset spring 424 is provided between the connecting element 335 and the connecting plate 422. Two ends of the second reset spring 424 are connected to the connecting element 335 and the connecting plate 422, respectively. In this embodiment, hook 3351 is provided below the connecting element 335, and one end of the second reset spring 424 is connected to the hook 3351. The second reset spring 424 allows the connecting plate 422 to have a tendency to push towards the locking element 41, ensuring reliable cooperation between the locking element 41 and the fixing pin 322 and ensuring reliable resetting of the pedal 421.

In order to ensure reliable transmission, the transmission rod 431 includes U-shaped elements 4311 at two ends and connecting rod 4312 connecting the U-shaped elements 4311 at the two ends. An end of the connecting rod 411 is provided in a groove of the U-shaped element 4311 and connected to the U-shaped element 4311. A portion of the connecting plate 422 is provided in the groove of the U-shaped element 4311 and connected to the U-shaped element 4311.

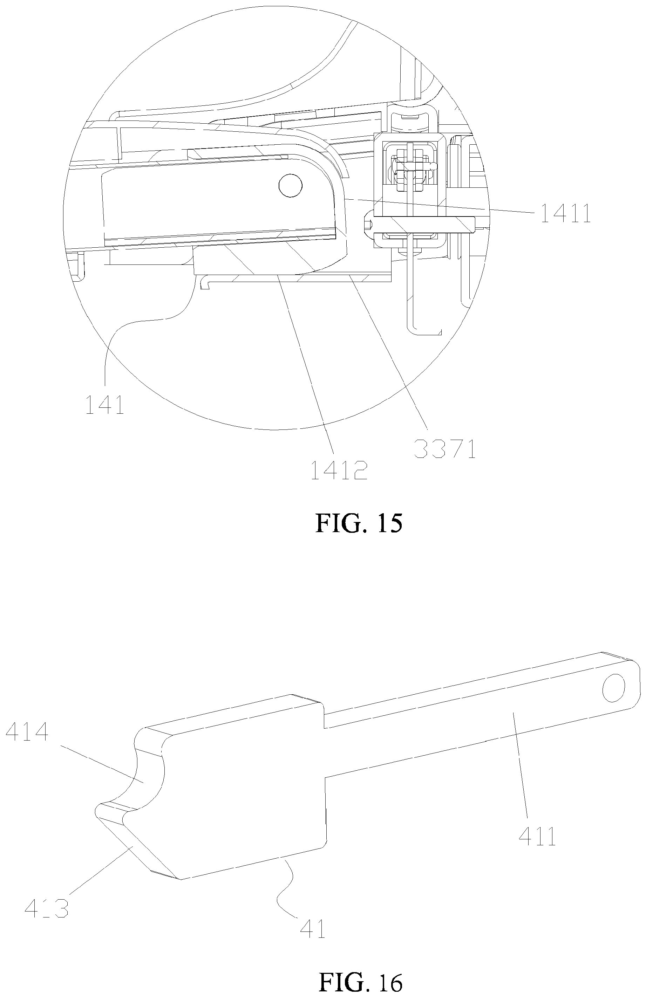

In order to ensure the reliable use of the locking element 41, as shown in FIG. 16, the locking element 41 includes bevel surface 413 and fixing groove 414 that fits with the fixing pin 322. The fixing groove 414 is provided with a curved surface. The bevel surface 413 is provided directly below the fixing groove 414. A lower end of the bevel surface 413 is converged towards an interior of the side frame 33. The bevel surface 413 facilitates the cooperation between the fixing pin 322 and the bevel surface 413 when the side frame 33 is reset, allowing the locking element 41 to retract. The curved surface of the fixing groove 414 can be well matched with the fixing pin 322.

In order to ensure the synchronous movement of the two side frames 33, reinforcing plate 334 is provided between the two side frames 33. The reinforcing plate 334 is provided on the upper surface of the side frame 33. The reinforcing plate 334 enables the synchronous movement between the two side frames 33 and improves the overall strength of the base 3.

In order to ensure the reliable resetting of the side frame 33, the reinforcing plate 334 abuts against the main frame 32 when the locking element 41 fits with the fixing pin 322, preventing the side frame 33 from rotating beyond a range during resetting.

In order to ensure reliable bias, first limiting rod 336 is provided between the two side frames 33. A rotation path of the first limiting rod 336 around the first rotating shaft 321 intersects with the main frame 32. Through the design of the first limiting rod 336, the first limiting rod 336 abuts against the main frame 32 when the side frame 33 rotates in place, thereby limiting further rotation of the side frame 33 and preventing the side frame 33 from rotating beyond its range.

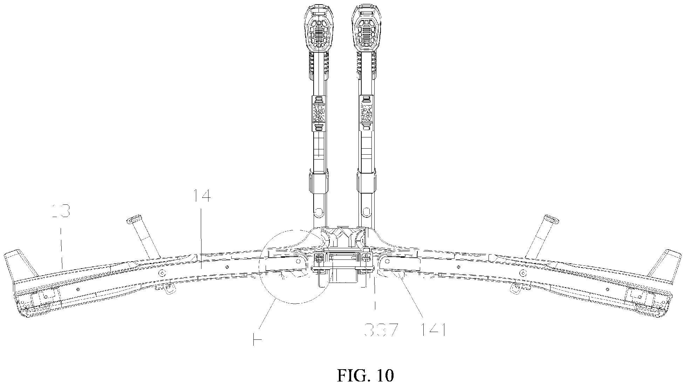

In order to ensure the reliable use of the wheel receiving arm 1, as shown in FIGS. 10 and 15, the side frame 33 is provided with mounting base 337. The mounting base 337 is provided with support surface 3371. The wheel receiving arm 1 includes protective shell 13 and bracket 14. The protective shell 13 is sleeved outside the bracket 14. The bracket 14 is provided with support element 141. The support element 141 is provided with first surface 1411 facing the side frame 33 and second surface 1412 adjacent to the first surface 1411. The second surface 1412 is below the first surface 1411, and the first surface 1411 and the second surface 1412 form a circular arc transition. In an unfolded state of the wheel receiving arm 1, the second surface 1412 is in contact with the support surface 3371. The mounting base 337 is rotatably connected to the bracket 14. The support surface 3371 can abut against the second surface 1412, allowing the wheel receiving arm 1 to be in the unfolded state. The circular arc transition between the first surface 1411 and the second surface 1412 prevents the support element 141 from colliding with the support surface 3371 during rotation.

In order to ensure the structural reliability of the mounting base 337, as shown in FIG. 14, the mounting base 337 includes bottom plate 3372 and side plates 3373 provided on two sides of the bottom plate 3372. One side of the side plate 3373 is fixedly connected to an outer surface of the side frame 33. The bottom plate 3372 is lower than a lower surface of the side frame 33. The bottom plate 3372 and side plates 3373 of the mounting base 337 form a reliable U-shaped structure. The bottom plate 3372 is lower than the lower surface of the side frame 33, leaving a gap between the bottom plate 3372 and the lower surface of the side frame 33, which facilitates the removal of dirt and prevents the accumulation of dirt, dust, etc.

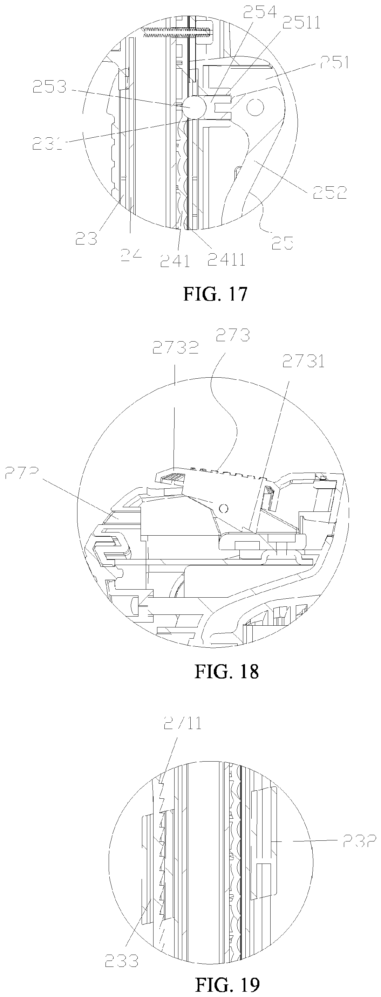

In order to ensure reliable support for the bike, as shown in FIG. 17, the support arm 2 includes support frame 23, extension frame 24, and extension frame locking mechanism 25. A bottom of the support frame 23 is connected to the base 3. The extension frame 24 is movably provided on the support frame 23 in a penetrating manner. The extension frame locking mechanism 25 includes fixed seat 251 and manual limiting member 252. The fixed seat 251 is sleeved on the support frame 23. The manual limiting member 252 is movably connected to the fixed seat 251. In a first state, the manual limiting member 252 prevents the extension frame 24 from moving up and down relative to the support frame 23. In a second state, the extension frame 24 is movable up and down relative to the support frame 23. In this embodiment, the manual limiting member 252 is pressed by a handle, and can also be slid by a button, pressed by a button, or pulled by a dial, etc. The extension frame 24 can be extended and retracted up and down relative to the support frame 23, so as to adjust a height of the support arm 2, thereby improving applicability. The extension frame locking mechanism 25 is configured to lock the movement of the extension frame 24. The manual limiting member 252 is movably connected to the fixed seat 251, which facilitates the mounting and rotation of the manual limiting member 252. Locking and unlocking the free movement of the extension frame 24 through the manual limiting member 252 is reliable.

In order to ensure reliable locking, the extension frame 24 is provided with fixing strip 241. Limiting element 253 is provided between the manual limiting member 252 and the fixing strip 241. The fixing strip 241 is provided with first limiting groove 2411 that fits with the limiting element 253. The manual limiting member 252 has a tendency to abut the limiting element 253 against the fixing strip 241, which can be achieved by a prior art such as a torsion spring or a reset spring. The fixing strip 241 adopts a split design for ease of replacement and maintenance. The limiting element 253 fits with the first limiting groove 2411 to provide simple and convenient locking. When in use, the manual limiting member 252 is raised to separate the limiting element 253 from the first limiting groove 2411, thereby completing unlocking and entering the second state. The extension frame 24 is pulled to extend or retract, and when the extension frame is extended or retracted in place, the manual limiting member 252 is pressed down to snap the limiting element 253 into the first limiting groove 2411, thereby completing locking and entering the first state.

In order to facilitate the telescopic movement of the extension frame 24, the limiting element 253 is spherical. The limiting element 253 is spherical, and the first limiting groove 2411 is spherical or curved. In this way, the limiting element 253 and the first limiting groove 2411 are well matched, and the limiting element 253 can accurately enter the first limiting groove 2411, which facilitates the telescopic movement of the extension frame 24. The design reduces the collision interference between the extension frame 24 and the limiting element 253, and when the extension frame 24 and the limiting element 253 abut, it is easy for the extension frame to slide on a spherical surface, extending the telescopic service life of the extension frame 24.

In order to reduce the difficulty of mounting, the limiting element 253 and the manual limiting member 252 are split structures, which is convenient for assembly, reduces the accuracy requirements for production and assembly, and reduces production costs.

In order to facilitate the passage of the limiting element 253, the support frame 23 is provided with first through hole 231. The limiting element 253 is provided in the first through hole 231 in a penetrating manner, and the first through hole 231 plays a guiding role for the limiting element 253.

In order to ensure reliable movement of the limiting element 253, abutting element 254 is provided between the limiting element 253 and the manual limiting member 252. The fixed seat 251 is provided with guide channel 2511. The guide channel 2511 is concentric with the first through hole 231. The abutting element 254 is movably provided on the guide channel 2511 in a penetrating manner. Two ends of the abutting element 254 abut against the manual limiting member 252 and the limiting element 253, respectively. The guide channel 2511 is configured to guide the movement of the abutting element 254. The abutting element 254 plays a role of blocking the limiting element 253 in the guide channel 2511, preventing the limiting element 253 from escaping from the guide channel 2511. In this way, after the manual limiting member 252 is opened, there is a gap between the manual limiting member 252 and the abutting element 254, allowing the abutting element 254 and the limiting element 253 to move within the scope of the guide channel 2511, facilitating the fixing strip 241 to open the limiting element 253 and move. However, the size of the gap is not greater than a length of the abutting element 254, preventing the abutting element 254 from escaping from the guide channel 2511.

In order to ensure the safety of the extension frame 24, top sleeve 26 is provided at a top end of the extension frame 24. The top sleeve 26 is connected to the top end of the extension frame 24, and it can be sleeved on the top end of the extension frame 24. The top sleeve 26 can cover the top end of the extension frame 24 so as to prevent a cross-section of the extension frame 24 from scratching a user or the bike, improving safety. An outer diameter of the top sleeve 26 is not less than an outer diameter of the support frame 23 so as to prevent the extension frame 24 from fully retracting into the support frame 23, ensuring reliable use of the extension frame 24.

In order to ensure the stability and reliability of the bike, as shown in FIGS. 1 and 18, the top sleeve 26 is provided with strap locking device 27. The strap locking device 27 is provided with downward extending strap 271. The strap 271 is configured to bind the bike. The strap locking device 27 is provided with second throughslot 272 for accommodating the strap 271. The strap 271 passes through the second throughslot 272 to form encirclement with the strap locking device 27, so as to fix a portion of the bike in the encirclement. The strap locking device 27 can also serve as a handle for dragging the extension frame 24.

In order to ensure the reliable locking of the strap 271, as shown in FIGS. 18 and 19, the strap locking device 27 is provided with ratchet buckle 273. The ratchet buckle 273 is rotatably connected to the strap locking device 27. The ratchet buckle 273 has a tendency to move towards the locking strap 271, which can be achieved by a torsion spring or a reset spring. The strap 271 is provided with second buckle slots 2711 that fit with the ratchet buckle 273. There are multiple second buckle slots 2711 provided for easy adjustment. The ratchet buckle 273 fits with the strap 271 to allow the strap 271 to enter freely. Withdrawing the strap 271 will be blocked by the ratchet buckle 273, ensuring the binding safety and reliability of the bike.

In order to ensure the reliable use of the ratchet buckle 273, the ratchet buckle 273 includes buckle teeth 2731 and trigger 2732. The buckle teeth 2731 and the trigger 2732 are respectively provided on two sides of a rotation center of the ratchet buckle 273. The buckle teeth 2731 fit with the second buckle slots 2711 to ensure reliable fixation. The trigger 2732 is configured to separate the buckle teeth 2731 from the second buckle slots 2711, allowing the strap 271 to be withdrawn.

In order to ensure the abutting safety of the bike, the strap locking device 27 is provided with support pad 274. The support pad 274 abuts against the bike. The support pad 274 is made of a soft material to prevent damage to the bike during a collision.

In order to fix the strap 271, sleeve pipe 232 is sleeved on the support frame 23. The sleeve pipe 232 is provided with first throughslot 233 for accommodating the strap 271. The first throughslot 233 is configured to store the strap 271 at ordinary times, thereby preventing the strap 271 from fluttering.

The strap locking device 27, the top sleeve 26, the extension frame 24, and the fixing strip 241 are fixedly connected by the same bolt, and are all fixed to the extension frame 24, providing good stress resistance and reliable structure.

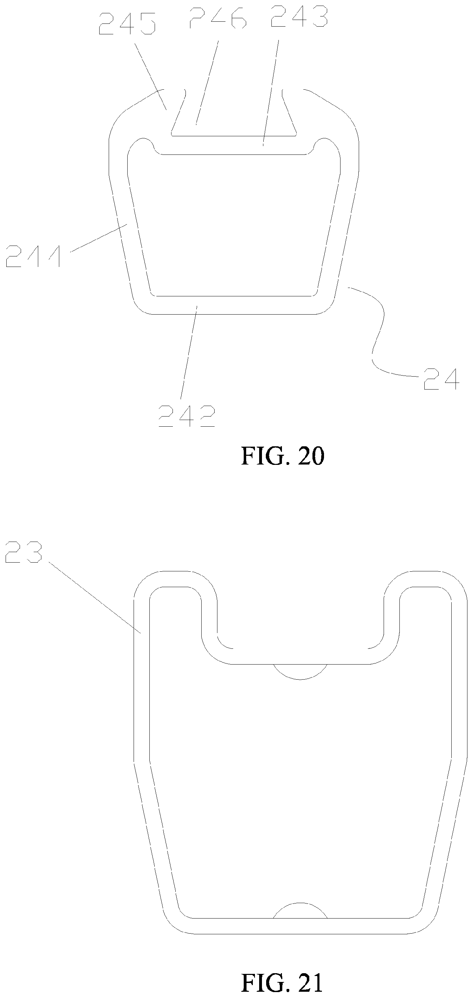

In order to ensure a high strength of the extension frame 24, as shown in FIG. 20, the cross-section of the extension frame 24 includes bottom edge 242, top edge 243, and first side edges 244 symmetrically provided on two sides of the bottom edge 242. Two ends of the bottom edge 242 are respectively connected to bottom ends of the first side edges 244 on the two sides. The first side edges 244 are inclined outward. Top ends of the first side edges 244 are connected to the top edge 243. Two sides of the top edge 243 are symmetrically provided with second side edges 245. Two ends of the top edge 243 are respectively connected to bottom ends of the second side edges 245 on the two sides. The second side edges 245 are inclined inward. Top ends of the second side edges 245 are respectively connected to the top ends of the first side edges 244. A highest point of the top edge 243 is lower than the top ends of the first side edges 244. The top edge 243 is parallel to the bottom edge 242. The bottom edge 242, the top edge 243, and the first side edges 244 form a circle with a high structural strength. The top edge 243 is lower than the top ends of the first side edges 244, making the top edge 243 concave and improving the structural strength.

In order to facilitate the mounting of the fixing strip 241, the top edge 243 and the second side edges 245 enclose mounting cavity 246. The fixing strip 241 is provided in the mounting cavity 246. The mounting cavity 246 is provided with a large bottom surface and a small opening. Once the fixing strip 241 is inserted from one side, it cannot be removed from the opening, and its mounting and fixation is completed when the upper end is connected to the extension frame 24 by a bolt. The design is simple, convenient, and reliable.

In order to ensure the reliability of the support frame 23, as shown in FIG. 21, a cross-section of the support frame 23 is concave, which provides higher overall strength compared to a simple rectangular shape.

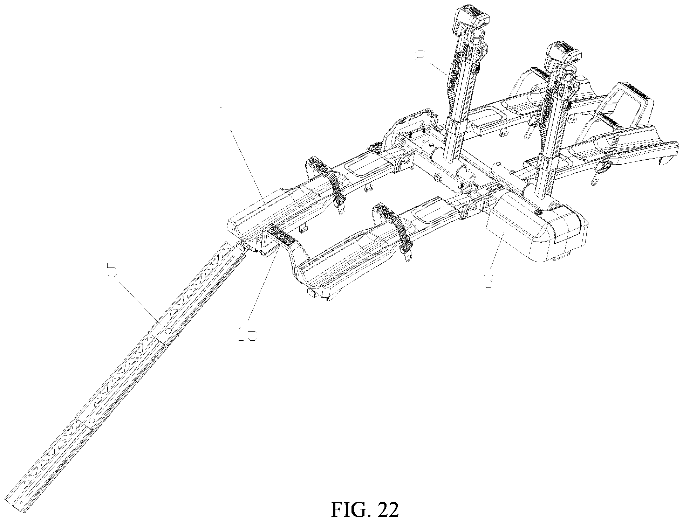

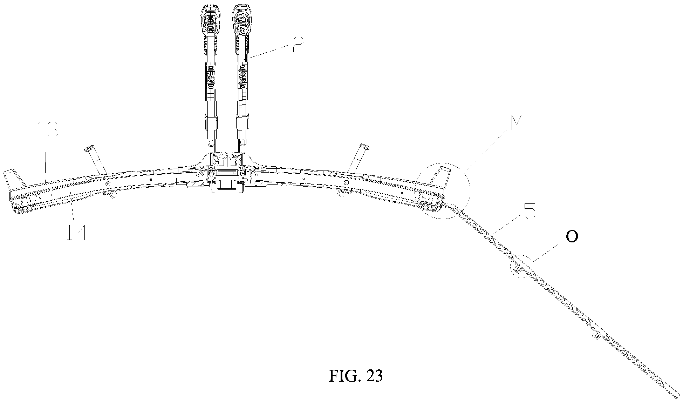

In order to ensure convenient loading and unloading of the bike, as shown in FIGS. 22, 23, and 28, the bike rack for a vehicle further includes sliding push plate 5. The sliding push plate 5 is configured to connect the wheel receiving arm 1 to a ground. An end of the wheel receiving arm 1 is provided with receiving cavity 12. The receiving cavity 12 is provided with connecting piece 6. The connecting piece 6 is configured to extend and retract relative to the receiving cavity 12. The sliding push plate 5 is provided with a connecting structure that fits with the connecting piece 6. When the sliding push plate 5 is connected to the wheel receiving arm 1, the sliding push plate 5 forms a ramp. The sliding push plate 5 is mounted when needed and disassembled after use, reducing the usual space occupation. The connecting piece 6 adopts a telescopic design, and can be hidden when not in use, with an attractive appearance and preventing the entry of external dust, dirt, etc. When it is necessary to load a bike, the sliding push plate 5 is connected to the wheel receiving arm 1 to form a ramp, which facilitates the pushing of the bike from the ground along the ramp onto the wheel receiving arm 1, making it convenient and labor-saving to load and unload the bike.

In order to ensure reliable connection, the connecting piece 6 is provided with second limiting groove 61 and connecting hook 62. The connecting structure includes first buckle slot 51. The first buckle slot 51 is located at an end of the sliding push plate 5. The first buckle slot 51 fits with the connecting hook 62. The receiving cavity 12 is provided with second limiting rod 121. The second limiting rod 121 is provided on the second limiting groove 61 in a penetrating manner. When a side wall of the second limiting groove 61 away from the connecting hook 62 abuts against the second limiting rod 121, the connecting hook 62 extends out of the wheel receiving arm 1. When a side wall of the second limiting groove 61 adjacent to the connecting hook 62 abuts against the second limiting rod 121, the connecting hook 62 is received into the wheel receiving arm 1. The connecting hook 62 fits with the first buckle slot 51. It is only necessary to buckle the first buckle slot 51 onto the connecting hook 62 to complete the connection and fixation between the wheel receiving arm 1 and the sliding push plate 5. It is only necessary to pick up the sliding push plate 5 and disengage the first buckle slot 51 from the connecting hook 62, thereby completing a disassembling purpose. The design is simple and convenient to use. The second limiting groove 61 fits with the second limiting rod 121 to limit the movement of the connecting piece 6 and prevent the connecting piece 6 from escaping.

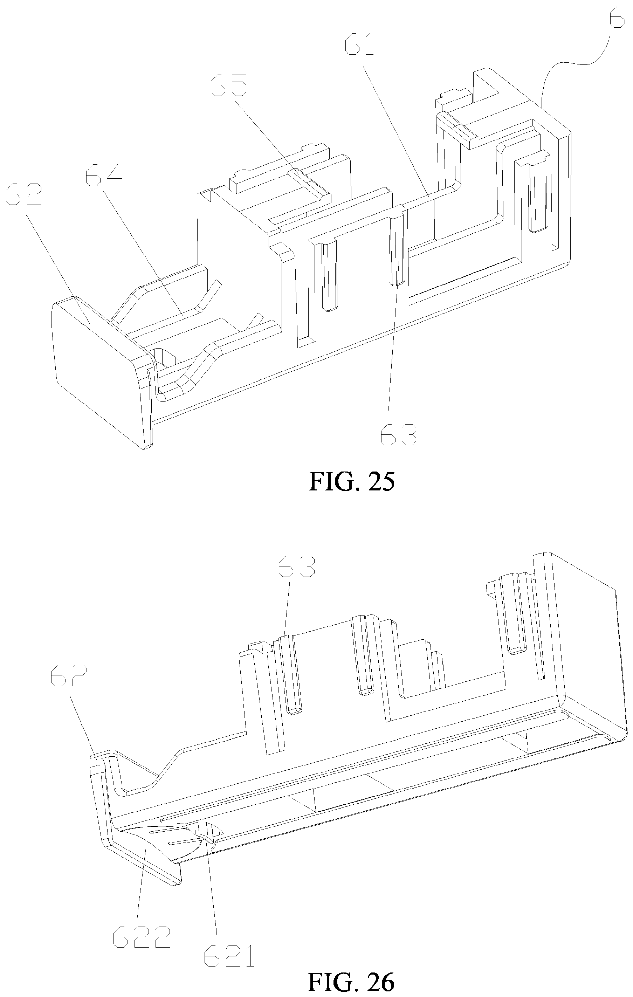

In order to ensure that the connecting piece 6 moves smoothly within the receiving cavity 12, as shown in FIG. 25, an outer surface of the connecting piece 6 that contacts the receiving cavity 12 is provided with boss 63. The boss 63 reduces a contact area between each surface of the connecting piece 6 and an inner wall of the receiving cavity 12, reducing sliding friction and allowing the connecting piece 6 to move smoothly.

In order to ensure the stable mounting of the connecting piece 6, a top surface of the connecting piece 6 is provided with upper buckles 65. The upper buckles 65 reduce friction with the inner wall of the receiving cavity 12. Meanwhile, the upper buckles 65 tilt upward to abut against the inner wall of the receiving cavity 12, preventing the connecting piece 6 from shaking and sliding freely inside. There are two upper buckles 65 arranged front and back, allowing the top surface of the connecting piece 6 to contact and remain stable with the inner wall of the receiving cavity 12.

In order to improve the strength of the connecting hook 62, the connecting hook 62 is provided with reinforcing strip 64.

In this embodiment, the bracket 14 is a square tube. The receiving cavity 12 is provided on the bracket 14. A hollow cavity of the square tube forms the receiving cavity 12. The protective shell 13 is configured to improve protection and provide more space for placing the bike. The bracket 14 is configured to provide support and carry the weight of the bike. The receiving cavity 12 is provided on the bracket 14, allowing a stress on the connecting piece 6 to be directly transmitted to the bracket 14, resulting in good load-bearing performance.

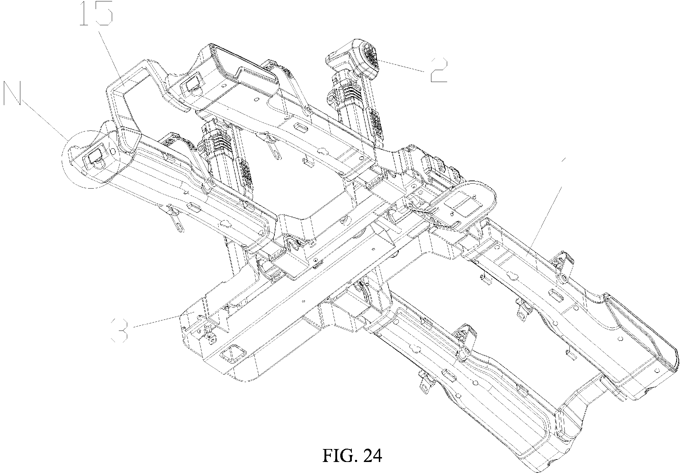

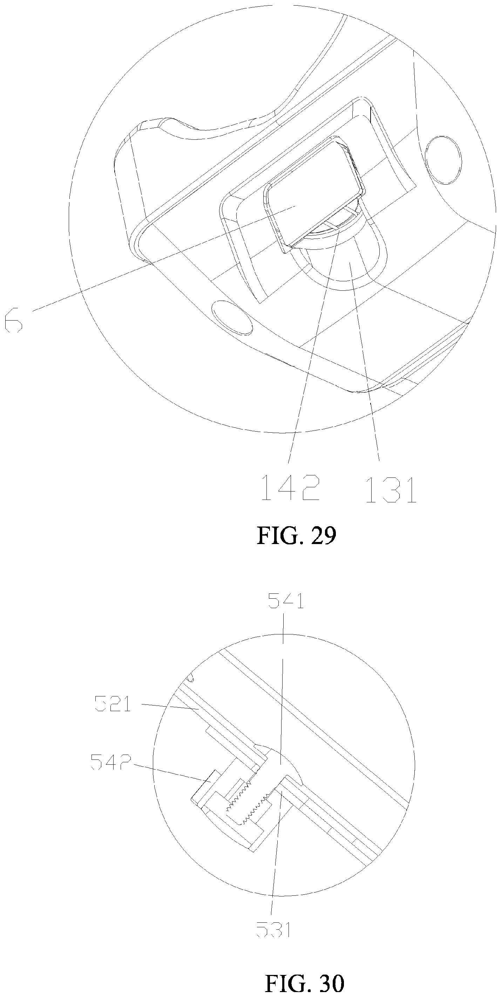

In order to facilitate the movement of the connecting piece 6, as shown in FIGS. 24 and 29, the protective shell 13 is provided with inwardly recessed arc-shaped groove 131. The arc-shaped groove 131 is located directly below the connecting piece 6. The arc-shaped groove 131 allows the user to extend a finger to a lower side of the connecting piece 6, facilitating the movement of the connecting piece 6 by the user.

In order to facilitate the movement of the connecting piece 6, the bracket 14 is provided with an arc-shaped gap 142. The arc-shaped gap 142 is located between the arc-shaped groove 131 and the connecting piece 6. The arc-shaped gap 142 allows the user to directly touch the connecting piece 6 after extending the finger to the lower side of the connecting piece 6, facilitating the movement of the connecting piece 6 by the user.

In order to facilitate the fixation of the connecting piece 6, as shown in FIG. 26, a bottom of the connecting hook 62 is provided with lower buckle 621. When the connecting hook 62 is received in the wheel receiving arm 1, the lower buckle 621 abuts against a bottom surface of the receiving cavity 12. When the connecting hook 62 is received in the wheel receiving arm 1, the lower buckle 621 is unlocked or locked by pressing it upward from the arc-shaped groove 131. One side of the lower buckle 621 is connected to the connecting hook 62, while the other three sides thereof are suspended, making it easy to press and deform the lower buckle 621. The user presses down the lower buckle 621 to snap the lower buckle 621 into the receiving cavity 12. After the lower buckle 621 abuts against the bottom surface of the receiving cavity 12, the connecting piece 6 cannot move freely, thereby completing the fixation of the connecting piece 6.

In order to facilitate the movement of the connecting piece 6, the bottom of the connecting hook 62 is provided with downwardly extending pull plate 622. The pull plate 622 facilitates the user to pull and move the connecting piece 6.

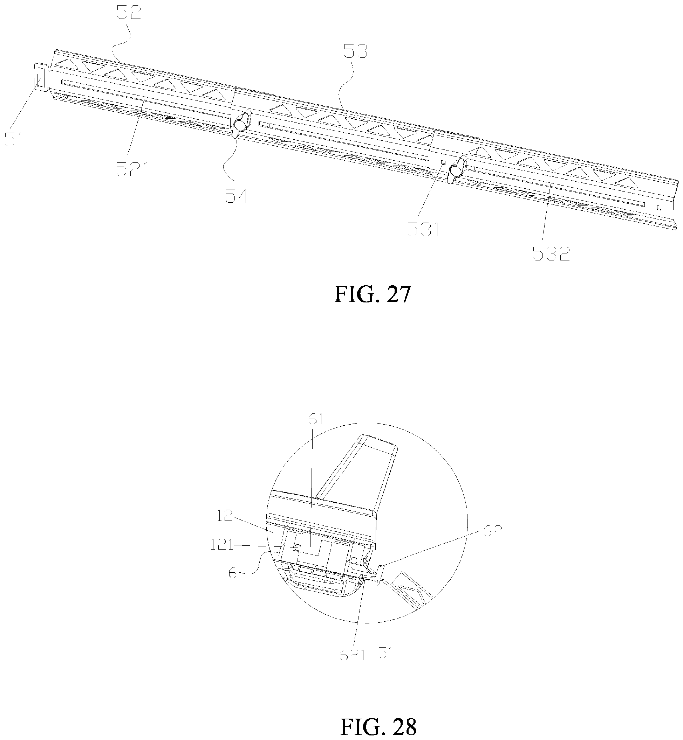

In order to ensure the reliable use of the sliding push plate 5, as shown in FIG. 27, the sliding push plate 5 includes push-up plate 52 and at least one extension plate 53. The push-up plate 52 and the adjacent extension plate 53 are connected by connecting assembly 54. The first buckle slot 51 is provided on the push-up plate 52. In this embodiment, there are two extension plates 53, and the adjacent two extension plates 53 are connected by the connecting assembly 54. The push-up plate 52 is connected to the connecting piece 6. The number of the extension plates 53 is adjustable according to needs.

In order to ensure the convenient mounting of the push-up plate 52 and the extension plate 53, as shown in FIG. 30, the connecting assembly 54 includes fixing element 541 and fastening element 542 that fit with each other for locking. The push-up plate 52 is provided with a first mounting hole or mounting slot 521. The extension plate 53 is provided with second mounting holes 531. The fixing element 541 is provided on the first mounting hole or mounting slot 521 and the second mounting holes 531 in a penetrating manner, and the push-up plate 52 and the extension plate 53 are fixedly connected by the fastening element 542. In this embodiment, the push-up plate 52 is provided with the mounting slot 521, and the fastening element 542 is a straight knob. Of course, the fastening element 542 can also be a nut, etc. The fixing element 541 is a half-round-head square-neck screw. Correspondingly, the first mounting hole and the second mounting holes 531 are square holes. The half-round-head square-neck screw fits with the square holes to prevent the half-round-head square-neck screw from rotating, making it easy to rotate the straight knob. The mounting slot 521 is provided along a length direction of the push-up plate 52. The mounting slot 521 fits with the second mounting holes 531 to achieve a length adjustment function between the push-up plate 52 and the extension plate 53.

In order to facilitate the length adjustment, the second mounting holes 531 are respectively provided at two ends of the extension plate 53. Adjustment slot 532 is provided between the two second mounting holes 531. The adjustment slot 532 is provided along a length direction of the extension plate 53. The adjustment slot 532 allows for the mounting length adjustment between extension plates 53. During mounting, the second mounting hole 531 of upper extension plate 53 is aligned with the adjustment slot 532 of lower extension plate 53, positioning the connecting assembly 54 in a middle of the two extension plates 53. This facilitates the loosening of the fastening element 542 for length adjustment, thereby achieving the length adjustment function of the sliding push plate 5.

In order to ensure the convenient rotation of the wheel receiving arms 1 on the same side, linkage 15 is provided between the adjacent wheel receiving arms 1 on the same side. The linkage 15 is fixedly connected to the wheel receiving arms 1 through second limiting rod 121. The second limiting rod 121 is provided on the bracket 14 in a penetrating manner and extends out of the bracket 14 at two ends. The second limiting rod 121 is configured to limit and fix the linkage 15. In this embodiment, the second limiting rod 121 uses a bolt, and there are two pairs of wheel receiving arms 1. The linkage 15 enables the wheel receiving arms 1 on the same side to rotate synchronously, enhancing the overall strength of the bike rack for a vehicle.

### Embodiment 2

This embodiment provides a bike rack for a vehicle. In this embodiment, except that there are three pairs of wheel receiving arms 1, other features are the same as those of Embodiment 1.

## Claims

1. A bike rack for a vehicle, comprising:
wheel receiving arms (1), configured to receive at least one wheel of at least one bike;
a support arm (2), configured to support the bike; and
a base (3), configured to provide a mounting position for the wheel receiving arms (1) and the support arm (2);
wherein the wheel receiving arms (1) are provided in pairs on two sides of the base (3), and there is at least one pair of wheel receiving arms;
**characterized in that** the wheel receiving arms (1) and the support arm (2) are rotatably connected to the base (3) through separate shafts, such that the wheel receiving arms (1) each are rotatably connected to the base (3) through a rotating rod (11) and the support arm (2) is rotatably connected to the base (3) through a rotating shaft (31), wherein the support arm (2) comprises a sleeve (21); the rotating shaft (31) is provided on the base (3); and the sleeve (21) is rotatably sleeved on the rotating shaft (31);
wherein a rotation axis of the rotating shaft (31) is parallel to rotation axes of the rotating rods (11).

2. The bike rack for the vehicle according to claim 1, **characterized in that** a wear-resistant sleeve (22) is provided between the sleeve (21) and the rotating shaft (31); the wear-resistant sleeve (22) is fixedly connected to the rotating shaft (31); the sleeve (21) is rotatably sleeved on the wear-resistant sleeve (22); an inner wall of the wear-resistant sleeve (22) is provided with a reinforcing rib (221); and an end of the wear-resistant sleeve (22) is provided with a radially protruding stop ring (222).

3. The bike rack for the vehicle according to claim 1, **characterized in that** the base (3) comprises a main frame (32) connected to the vehicle and side frames (33) symmetrically provided on two sides of the main frame (32); the main frame (32) is rotatably connected to the side frames (33) through a first rotating shaft (321); the bike rack for the vehicle further comprises a bias locking mechanism (4), and the bias locking mechanism (4) is configured for bike bias unlocking; the bias locking mechanism (4) is provided on at least one side frame (33); the bias locking mechanism (4) comprises a locking element (41) configured to extend and retract relative to the side frame (33) and a toggle element (42) configured to control the locking element (41) to extend and retract; the locking element (41) is provided at an end of the side frame (33) and protrudes outward; the main frame (32) is provided with a fixing pin (322) that extends outward; the fixing pin (322) fits with the locking element (41); and the toggle element (42) is connected to the locking element (41) through a transmission assembly (43).

4. The bike rack for the vehicle according to claim 3, **characterized in that** the transmission assembly (43) comprises a transmission rod (431) and a guide sleeve (432); the guide sleeve (432) comprises a first side wall (433) provided at an end of the side frame (33); a portion of the locking element (41) is provided on the first side wall (433) in a penetrating manner; the locking element (41) is connected to the toggle element (42) through the transmission rod (431); the guide sleeve (432) further comprises a second side wall (434) provided in the side frame (33); the locking element (41) is provided with a connecting rod (411) oriented towards an interior of the side frame (33); a portion of the connecting rod (411) is provided on the second side wall (434) in a penetrating manner; an end of the connecting rod (411) is connected to the transmission rod (431); a first reset spring (412) is sleeved on the connecting rod (411); an internal cavity (435) is formed between the first side wall (433) and the second side wall (434); the first reset spring (412) is provided over the internal cavity (435); and two ends of the first reset spring (412) respectively abut against the locking element (41) and the second side wall (434).

5. The bike rack for the vehicle according to claim 3, **characterized in that** the toggle element (42) and the locking element (41) are respectively provided on two sides of the first rotating shaft (321); the toggle element (42) comprises a pedal (421) and a connecting plate (422); the connecting plate (422) is rotatably connected to the side frame (33) through a second rotating shaft (423); the connecting plate (422) is connected to the locking element (41) through the transmission assembly (43); a joint between the connecting plate (422) and the transmission assembly (43) and the pedal (421) are located on two sides of the second rotating shaft (423), respectively; a gap (332) is provided at a bottom of the side frame (33); a portion of the connecting plate (422) extends into the side frame (33) through the gap (332); in a reset state of the pedal (421), a side of the connecting plate (422) abuts against a side of the gap (332); the bottom of the side frame (33) is provided with a mounting port (333); and the mounting port (333) is communicated with the gap (332).

6. The bike rack for the vehicle according to claim 5, **characterized in that** an end of each of the two side frames (33) away from the locking element (41) is provided with a connecting element (335); the connecting element (335) is configured to connect the two side frames (33); a second reset spring (424) is provided between the connecting element (335) and the connecting plate (422); two ends of the second reset spring (424) are connected to the connecting element (335) and the connecting plate (422), respectively; a reinforcing plate (334) is provided between the two side frames (33); the reinforcing plate (334) is located on an upper surface of the side frame (33); the reinforcing plate (334) abuts against the main frame (32) when the locking element (41) fits with the fixing pin (322); a first limiting rod (336) is provided between the two side frames (33); and a rotation path of the first limiting rod (336) around the first rotating shaft (321) intersects with the main frame (32).

7. The bike rack for the vehicle according to claim 1, **characterized in that** the support arm (2) comprises a support frame (23), an extension frame (24), and an extension frame locking mechanism (25); a bottom of the support frame (23) is connected to the base (3); the extension frame (24) is movably provided on the support frame (23) in a penetrating manner; the extension frame locking mechanism (25) comprises a fixed seat (251) and a manual limiting member (252); the fixed seat (251) is sleeved on the support frame (23); the manual limiting member (252) is movably connected to the fixed seat (251); in a first state, the manual limiting member (252) prevents the extension frame (24) from moving up and down relative to the support frame (23); and in a second state, the extension frame (24) is movable up and down relative to the support frame (23).

8. The bike rack for the vehicle according to claim 7, **characterized in that** the extension frame (24) is provided with a fixing strip (241); a limiting element (253) is provided between the manual limiting member (252) and the fixing strip (241); the fixing strip (241) is provided with a first limiting groove (2411) that fits with the limiting element (253); the limiting element (253) and the manual limiting member (252) are split structures; the support frame (23) is provided with a first through hole (231); the limiting element (253) is provided in the first through hole (231) in a penetrating manner; an abutting element (254) is provided between the limiting element (253) and the manual limiting member (252); the fixed seat (251) is provided with a guide channel (2511); the guide channel (2511) is concentric with the first through hole (231); the abutting element (254) is movably provided on the guide channel (2511) in a penetrating manner; and two ends of the abutting element (254) abut against the manual limiting member (252) and the limiting element (253), respectively.

9. The bike rack for the vehicle according to claim 7, **characterized in that** a cross-section of the extension frame (24) comprises a bottom edge (242), a top edge (243), and first side edges (244) symmetrically provided on two sides of the bottom edge (242); two ends of the bottom edge (242) are respectively connected to bottom ends of the first side edges (244) on the two sides; the first side edges (244) are inclined outward; top ends of the first side edges (244) are connected to the top edge (243); two sides of the top edge (243) are symmetrically provided with second side edges (245); two ends of the top edge (243) are respectively connected to bottom ends of the second side edges (245) on the two sides; the second side edges (245) are inclined inward; top ends of the second side edges (245) are respectively connected to the top ends of the first side edges (244); a highest point of the top edge (243) is lower than the top ends of the first side edges (244); the top edge (243) is parallel to the bottom edge (242); the top edge (243) and the second side edges (245) enclose a mounting cavity (246); and the fixing strip (241) is provided in the mounting cavity (246).

10. The bike rack for the vehicle according to claim 1, **characterized by** further comprising a sliding push plate (5), wherein the sliding push plate (5) is configured to connect the wheel receiving arm (1) to a ground; an end of the wheel receiving arm (1) is provided with a receiving cavity (12); the receiving cavity (12) is provided with a connecting piece (6); the connecting piece (6) is configured to extend and retract relative to the receiving cavity (12); the sliding push plate (5) is provided with a connecting structure that fits with the connecting piece (6); and when the sliding push plate (5) is connected to the wheel receiving arm (1), the sliding push plate (5) forms a ramp.

11. The bike rack for the vehicle according to claim 10, **characterized in that** the connecting piece (6) is provided with a second limiting groove (61) and a connecting hook (62); the connecting structure comprises a first buckle slot (51); the first buckle slot (51) is located at an end of the sliding push plate (5) and fits with the connecting hook (62); the receiving cavity (12) is provided with a second limiting rod (121); the second limiting rod (121) is provided on the second limiting groove (61) in a penetrating manner; when a side wall of the second limiting groove (61) away from the connecting hook (62) abuts against the second limiting rod (121), the connecting hook (62) extends out of the wheel receiving arm (1); and when a side wall of the second limiting groove (61) adjacent to the connecting hook (62) abuts against the second limiting rod (121), the connecting hook (62) is received into the wheel receiving arm (1).

12. The bike rack for the vehicle according to claim 10, **characterized in that** the sliding push plate (5) comprises a push-up plate (52) and at least one extension plate (53); the push-up plate (52) and an adjacent extension plate (53) are connected by a connecting assembly (54); the first buckle slot (51) is provided on the push-up plate (52); the connecting assembly (54) comprises a fixing element (541) and a fastening element (542) that fit with each other for locking; the push-up plate (52) is provided with a first mounting hole or mounting slot (521); the extension plate (53) is provided with second mounting holes (531); the fixing element (541) is provided on the first mounting hole or mounting slot (521) and the second mounting holes (531) in a penetrating manner; the push-up plate (52) and the extension plate (53) are fixedly connected by the fastening element (542); the second mounting holes (531) are respectively provided at two ends of the extension plate (53); and an adjustment slot (532) is provided between the two second mounting holes (531).

## Patentansprüche

1. - Fahrradträger für ein Fahrzeug, umfassend:
Radaufnahmearme (1), die konfiguriert sind, um mindestens ein Rad von mindestens einem Fahrrad aufzunehmen;
einen Stützarm (2), der konfiguriert ist, um das Fahrrad zu stützen; und
eine Basis (3), die konfiguriert ist, um eine Montageposition für die Radaufnahmearme (1) und den Stützarm (2) bereitzustellen;
wobei die Radaufnahmearme (1) paarweise an zwei Seiten der Basis (3) bereitgestellt sind und mindestens ein Paar Radaufnahmearme vorhanden ist;
**dadurch gekennzeichnet, dass** die Radaufnahmearme (1) und der Stützarm (2) über separate Wellen drehbar mit der Basis (3) verbunden sind, sodass die Radaufnahmearme (1) jeweils drehbar über eine Drehstange (11) mit der Basis (3) verbunden sind und der Stützarm (2) drehbar über eine Drehwelle (31) mit der Basis (3) verbunden ist, wobei der Stützarm (2) eine Hülse (21) umfasst; die Drehwelle (31) an der Basis (3) bereitgestellt ist; und die Hülse (21) drehbar auf die Drehwelle (31) aufgesteckt ist;
wobei eine Drehachse der Drehwelle (31) parallel zu den Drehachsen der Drehstangen (11) ist.

2. - Fahrradträger für das Fahrzeug nach Anspruch 1, **dadurch gekennzeichnet, dass** zwischen der Hülse (21) und der Drehwelle (31) eine verschleißfeste Hülse (22) bereitgestellt ist; die verschleißfeste Hülse (22) fest mit der Drehwelle (31) verbunden ist; die Hülse (21) drehbar auf die verschleißfeste Hülse (22) aufgesteckt ist; eine Innenwand der verschleißfesten Hülse (22) mit einer Verstärkungsrippe (221) versehen ist; und ein Ende der verschleißfesten Hülse (22) mit einem radial hervorstehenden Anschlagring (222) versehen ist.

3. - Fahrradträger für das Fahrzeug nach Anspruch 1, **dadurch gekennzeichnet, dass** die Basis (3) einen mit dem Fahrzeug verbundenen Hauptrahmen (32) und Seitenrahmen (33), die symmetrisch an zwei Seiten des Hauptrahmens (32) bereitgestellt sind, umfasst; der Hauptrahmen (32) drehbar über eine erste Drehwelle (321) mit den Seitenrahmen (33) verbunden ist; der Fahrradträger für das Fahrzeug ferner einen Schrägverriegelungsmechanismus (4) umfasst, wobei der Schrägverriegelungsmechanismus (4) für eine Schrägentriegelung des Fahrrads konfiguriert ist; der Schrägverriegelungsmechanismus (4) an mindestens einem Seitenrahmen (33) bereitgestellt ist; der Schrägverriegelungsmechanismus (4) ein Verriegelungselement (41), das in Bezug auf den Seitenrahmen (33) aus- und einfahrbar ist, und ein Kippelement (42), das konfiguriert ist, um das Verriegelungselement (41) aus- und einzufahren, umfasst; das Verriegelungselement (41) an einem Ende des Seitenrahmens (33) bereitgestellt und nach außen hervorstehend ist; der Hauptrahmen (32) mit einem nach außen hervorstehenden Fixierstift (322) versehen ist; der Fixierstift (322) mit dem Verriegelungselement (41) zusammenpasst; und das Kippelement (42) über eine Übertragungsanordnung (43) mit dem Verriegelungselement (41) verbunden ist.

4. - Fahrradträger für das Fahrzeug nach Anspruch 3, **dadurch gekennzeichnet, dass** die Übertragungsanordnung (43) eine Übertragungsstange (431) und eine Führungshülse (432) umfasst; die Führungshülse (432) eine erste Seitenwand (433) umfasst, die an einem Ende des Seitenrahmens (33) bereitgestellt ist; ein Abschnitt des Verriegelungselements (41) an der ersten Seitenwand (433) durchdringend bereitgestellt ist; das Verriegelungselement (41) über die Übertragungsstange (431) mit dem Kippelement (42) verbunden ist; die Führungshülse (432) ferner eine zweite Seitenwand (434) umfasst, die in dem Seitenrahmen (33) bereitgestellt ist; das Verriegelungselement (41) mit einer Verbindungsstange (411) versehen ist, die zum Inneren des Seitenrahmens (33) ausgerichtet ist; ein Abschnitt der Verbindungsstange (411) an der zweiten Seitenwand (434) durchdringend bereitgestellt ist; ein Ende der Verbindungsstange (411) mit der Übertragungsstange (431) verbunden ist; eine erste Rückholfeder (412) auf die Verbindungsstange (411) aufgesteckt ist; ein innerer Hohlraum (435) zwischen der ersten Seitenwand (433) und der zweiten Seitenwand (434) gebildet ist; die erste Rückholfeder (412) über dem inneren Hohlraum (435) bereitgestellt ist; und zwei Enden der ersten Rückholfeder (412) jeweils an dem Verriegelungselement (41) und an der zweiten Seitenwand (434) anliegen.

5. - Fahrradträger für das Fahrzeug nach Anspruch 3, **dadurch gekennzeichnet, dass** das Kippelement (42) und das Verriegelungselement (41) jeweils an zwei Seiten der ersten Drehwelle (321) bereitgestellt sind; das Kippelement (42) ein Pedal (421) und eine Verbindungsplatte (422) umfasst; die Verbindungsplatte (422) drehbar über eine zweite Drehwelle (423) mit dem Seitenrahmen (33) verbunden ist; die Verbindungsplatte (422) über die Übertragungsanordnung (43) mit dem Verriegelungselement (41) verbunden ist; sich eine Verbindung zwischen der Verbindungsplatte (422) und der Übertragungsanordnung (43) sowie das Pedal (421) jeweils an zwei Seiten der zweiten Drehwelle (423) befinden; an einer Unterseite des Seitenrahmens (33) ein Spalt (332) bereitgestellt ist; sich ein Abschnitt der Verbindungsplatte (422) durch den Spalt (332) in den Seitenrahmen (33) erstreckt; in einem Rückholzustand des Pedals (421) eine Seite der Verbindungsplatte (422) an einer Seite des Spalts (332) anliegt; die Unterseite des Seitenrahmens (33) mit einer Montageöffnung (333) versehen ist; und die Montageöffnung (333) mit dem Spalt (332) verbunden ist.

6. - Fahrradträger für das Fahrzeug nach Anspruch 5, **dadurch gekennzeichnet, dass** ein Ende jedes der zwei Seitenrahmen (33), das von dem Verriegelungselement (41) entfernt ist, mit einem Verbindungselement (335) versehen ist; das Verbindungselement (335) konfiguriert ist, um die zwei Seitenrahmen (33) zu verbinden; eine zweite Rückholfeder (424) zwischen dem Verbindungselement (335) und der Verbindungsplatte (422) bereitgestellt ist; zwei Enden der zweiten Rückholfeder (424) jeweils mit dem Verbindungselement (335) und der Verbindungsplatte (422) verbunden sind; eine Verstärkungsplatte (334) zwischen den zwei Seitenrahmen (33) bereitgestellt ist; sich die Verstärkungsplatte (334) an einer oberen Fläche des Seitenrahmens (33) befindet; die Verstärkungsplatte (334) an dem Hauptrahmen (32) anliegt, wenn das Verriegelungselement (41) mit dem Fixierstift (322) zusammenpasst; eine erste Begrenzungsstange (336) zwischen den zwei Seitenrahmen (33) bereitgestellt ist; und ein Drehverlauf der ersten Begrenzungsstange (336) um die erste Drehwelle (321) den Hauptrahmen (32) schneidet.

7. - Fahrradträger für das Fahrzeug nach Anspruch 1, **dadurch gekennzeichnet, dass** der Stützarm (2) einen Stützrahmen (23), einen Verlängerungsrahmen (24) und einen Verlängerungsrahmen-Verriegelungsmechanismus (25) umfasst; eine Unterseiten des Stützrahmens (23) mit der Basis (3) verbunden ist; der Verlängerungsrahmen (24) bewegbar an dem Stützrahmen (23) durchdringend bereitgestellt ist; der Verlängerungsrahmen-Verriegelungsmechanismus (25) einen feststehenden Sitz (251) und ein manuelles Begrenzungselement (252) umfasst; der feststehende Sitz (251) auf den Stützrahmen (23) aufgesteckt ist; das manuelle Begrenzungselement (252) bewegbar mit dem feststehenden Sitz (251) verbunden ist; in einem ersten Zustand das manuelle Begrenzungselement (252) verhindert, dass sich der Verlängerungsrahmen (24) in Bezug auf den Stützrahmen (23) nach oben und unten bewegt; und in einem zweiten Zustand der Verlängerungsrahmen (24) in Bezug auf den Stützrahmen (23) nach oben und unten bewegbar ist.

8. - Fahrradträger für das Fahrzeug nach Anspruch 7, **dadurch gekennzeichnet, dass** der Verlängerungsrahmen (24) mit einem Befestigungsstreifen (241) versehen ist; ein Begrenzungselement (253) zwischen dem manuellen Begrenzungselement (252) und dem Befestigungsstreifen (241) bereitgestellt ist; der Befestigungsstreifen (241) mit einer ersten Begrenzungsnut (2411) versehen ist, die mit dem Begrenzungselement (253) zusammenpasst; das Begrenzungselement (253) und das manuelle Begrenzungselement (252) separate Strukturen sind; der Stützrahmen (23) mit einem ersten Durchgangsloch (231) versehen ist; das Begrenzungselement (253) durchdringend im ersten Durchgangsloch (231) bereitgestellt ist; ein Anlageelement (254) zwischen dem Begrenzungselement (253) und dem manuellen Begrenzungselement (252) bereitgestellt ist; der feststehende Sitz (251) mit einem Führungskanal (2511) versehen ist; der Führungskanal (2511) konzentrisch mit dem ersten Durchgangsloch (231) ist; das Anlageelement (254) bewegbar durchdringend an dem Führungskanal (2511) bereitgestellt ist; und zwei Enden des Anlageelements (254) jeweils an dem manuellen Begrenzungselement (252) und an dem Begrenzungselement (253) anliegen.

9. - Fahrradträger für das Fahrzeug nach Anspruch 7, **dadurch gekennzeichnet, dass** ein Querschnitt des Verlängerungsrahmens (24) einen Bodenleiste (242), eine Oberleiste (243) und erste Seitenleisten (244) umfasst, die symmetrisch an zwei Seiten der Bodenleiste (242) bereitgestellt sind; zwei Enden der Bodenleiste (242) jeweils mit unteren Enden der ersten Seitenleisten (244) an den beiden Seiten verbunden sind; die ersten Seitenleisten (244) nach außen geneigt sind; obere Enden der ersten Seitenleisten (244) mit der Oberleiste (243) verbunden sind; an zwei Seiten der Oberleiste (243) symmetrisch zweite Seitenleisten (245) bereitgestellt sind; zwei Enden der Oberleiste (243) jeweils mit unteren Enden der zweiten Seitenleisten (245) an den beiden Seiten verbunden sind; die zweiten Seitenleisten (245) nach innen geneigt sind; obere Enden der zweiten Seitenleisten (245) jeweils mit den oberen Enden der ersten Seitenleisten (244) verbunden sind; ein höchster Punkt der Oberleiste (243) unterhalb der oberen Enden der ersten Seitenleisten (244) ist; die Oberleiste (243) parallel zu der Bodenleiste (242) ist; die Oberleiste (243) und die zweiten Seitenleisten (245) einen Montagehohlraum (246) umschließen; und der Befestigungsstreifen (241) in dem Montagehohlraum (246) bereitgestellt ist.

10. - Fahrradträger für das Fahrzeug nach Anspruch 1, **dadurch gekennzeichnet, dass** ferner eine gleitende Druckplatte (5) bereitgestellt ist, wobei die gleitende Druckplatte (5) konfiguriert ist, um den Radaufnahmearm (1) mit einem Boden zu verbinden; ein Ende des Radaufnahmearms (1) mit einem Aufnahmeraum (12) versehen ist; der Aufnahmeraum (12) mit einem Verbindungsteil (6) versehen ist; das Verbindungsteil (6) konfiguriert ist, um in Bezug auf den Aufnahmeraum (12) aus- und einzufahren; die gleitende Druckplatte (5) mit einer Verbindungsstruktur versehen ist, die mit dem Verbindungsteil (6) zusammenpasst; und wenn die gleitende Druckplatte (5) mit dem Radaufnahmearm (1) verbunden ist, die gleitende Druckplatte (5) eine Rampe bildet.

11. - Fahrradträger für das Fahrzeug nach Anspruch 10, **dadurch gekennzeichnet, dass** das Verbindungsteil (6) mit einer zweiten Begrenzungsnut (61) und einem Verbindungshaken (62) versehen ist; die Verbindungsstruktur einen ersten Einrastschlitz (51) umfasst; sich der erste Einrastschlitz (51) an einem Ende der gleitenden Druckplatte (5) befindet und mit dem Verbindungshaken (62) zusammenpasst; der Aufnahmeraum (12) mit einer zweiten Begrenzungsstange (121) versehen ist; die zweite Begrenzungsstange (121) durchdringend an der zweiten Begrenzungsnut (61) bereitgestellt ist; wenn eine von dem Verbindungshaken (62) abgewandte Seitenwand der zweiten Begrenzungsnut (61) an der zweiten Begrenzungsstange (121) anliegt, der Verbindungshaken (62) aus dem Radaufnahmearm (1) hervorsteht; und wenn eine an den Verbindungshaken (62) angrenzende Seitenwand der zweiten Begrenzungsnut (61) an der zweiten Begrenzungsstange (121) anliegt, der Verbindungshaken (62) in dem Radaufnahmearm (1) aufgenommen ist.

12. - Fahrradträger für das Fahrzeug nach Anspruch 10, **dadurch gekennzeichnet, dass** die gleitende Druckplatte (5) eine Aufschubplatte (52) und mindestens eine Verlängerungsplatte (53) umfasst; die Aufschubplatte (52) und eine benachbarte Verlängerungsplatte (53) durch eine Verbindungsanordnung (54) verbunden sind; der erste Einrastschlitz (51) an der Aufschubplatte (52) bereitgestellt ist; die Verbindungsanordnung (54) ein Befestigungselement (541) und ein Befestigungselement (542) umfasst, die zum Verriegeln miteinander zusammenpassen; die Aufschubplatte (52) mit einem ersten Montageloch oder Montageschlitz (521) versehen ist; die Verlängerungsplatte (53) mit zweiten Montagelöchern (531) versehen ist; das Befestigungselement (541) durchdringend in dem ersten Montageloch oder Montageschlitz (521) und in den zweiten Montagelöchern (531) bereitgestellt ist; die Aufschubplatte (52) und die Verlängerungsplatte (53) fest durch das Befestigungselement (542) miteinander verbunden sind; die zweiten Montagelöcher (531) jeweils an zwei Enden der Verlängerungsplatte (53) bereitgestellt sind; und zwischen den zwei zweiten Montagelöchern (531) ein Einstellschlitz (532) bereitgestellt ist.

## Revendications

1. - Porte-vélo pour un véhicule, comprenant :
des bras de réception de roue (1), configurés pour recevoir au moins une roue d'au moins un vélo ;
un bras de support (2), configuré pour supporter le vélo ; et
une base (3), configurée pour fournir une position de montage pour les bras de réception de roue (1) et le bras de support (2) ;
dans lequel les bras de réception de roue (1) sont disposés par paires sur deux côtés de la base (3) et il y a au moins une paire de bras de réception de roue ;
**caractérisé par le fait que** les bras de réception de roue (1) et le bras de support (2) sont reliés de manière rotative à la base (3) par l'intermédiaire d'arbres distincts, de telle sorte que les bras de réception de roue (1) sont chacun reliés de manière rotative à la base (3) par l'intermédiaire d'une tige rotative (11) et que le bras de support (2) est relié de manière rotative à la base (3) par l'intermédiaire d'un arbre rotatif (31), le bras de support (2) comprenant un manchon (21) ; l'arbre rotatif (31) étant disposé sur la base (3) ; et le manchon (21) étant enfilé de manière rotative sur l'arbre rotatif (31) ;
dans lequel un axe de rotation de l'arbre rotatif (31) est parallèle aux axes de rotation des tiges rotatives (11).

2. - Porte-vélo pour véhicule selon la revendication 1, **caractérisé par le fait qu'**un manchon résistant à l'usure (22) est disposé entre le manchon (21) et l'arbre rotatif (31) ; le manchon résistant à l'usure (22) est relié de manière fixe à l'arbre rotatif (31) ; le manchon (21) est enfilé de manière rotative sur le manchon résistant à l'usure (22) ; une paroi intérieure du manchon résistant à l'usure (22) comporte une nervure de renforcement (221) ; et une extrémité du manchon résistant à l'usure (22) comporte une bague d'arrêt (222) faisant saillie radialement.

3. - Porte-vélo pour véhicule selon la revendication 1, **caractérisé par le fait que** la base (3) comprend un cadre principal (32) relié au véhicule et des cadres latéraux (33) disposés de manière symétrique sur deux côtés du cadre principal (32) ; le cadre principal (32) est relié de manière rotative aux cadres latéraux (33) par l'intermédiaire d'un premier arbre rotatif (321) ; le porte-vélo pour véhicule comprend en outre un mécanisme de verrouillage par sollicitation (4), et le mécanisme de verrouillage par sollicitation (4) est configuré pour un déverrouillage du vélo par sollicitation ; le mécanisme de verrouillage par sollicitation (4) est disposé sur au moins un cadre latéral (33) ; le mécanisme de verrouillage par sollicitation (4) comprend un élément de verrouillage (41) configuré pour s'étendre et se rétracter par rapport au cadre latéral (33) et un élément bascule (42) configuré pour commander l'extension et la rétraction de l'élément de verrouillage (41) ; l'élément de verrouillage (41) est disposé à une extrémité du cadre latéral (33) et fait saillie vers l'extérieur ; le cadre principal (32) comporte une broche de fixation (322) qui s'étend vers l'extérieur ; la broche de fixation (322) est adaptée à l'élément de verrouillage (41) ; et l'élément bascule (42) est relié à l'élément de verrouillage (41) par l'intermédiaire d'un ensemble de transmission (43).

4. - Porte-vélo pour véhicule selon la revendication 3, **caractérisé par le fait que** l'ensemble de transmission (43) comprend une tige de transmission (431) et un manchon de guidage (432) ; le manchon de guidage (432) comprend une première paroi latérale (433) disposée à une extrémité du cadre latéral (33) ; une partie de l'élément de verrouillage (41) est disposée sur la première paroi latérale (433) d'une manière pénétrante ; l'élément de verrouillage (41) est relié à l'élément bascule (42) par l'intermédiaire de la tige de transmission (431) ; le manchon de guidage (432) comprend en outre une seconde paroi latérale (434) disposée dans le cadre latéral (33) ; l'élément de verrouillage (41) comporte une tige de liaison (411) orientée vers un intérieur du cadre latéral (33) ; une partie de la tige de liaison (411) est disposée sur la seconde paroi latérale (434) d'une manière pénétrante ; une extrémité de la tige de liaison (411) est reliée à la tige de transmission (431) ; un premier ressort de rappel (412) est enfilé sur la tige de liaison (411) ; une cavité interne (435) est formée entre la première paroi latérale (433) et la seconde paroi latérale (434) ; le premier ressort de rappel (412) est disposé au-dessus de la cavité interne (435) ; et deux extrémités du premier ressort de rappel (412) viennent respectivement en butée contre l'élément de verrouillage (41) et la seconde paroi latérale (434).

5. - Porte-vélo pour véhicule selon la revendication 3, **caractérisé par le fait que** l'élément bascule (42) et l'élément de verrouillage (41) sont respectivement disposés sur deux côtés du premier arbre rotatif (321) ; l'élément bascule (42) comprend une pédale (421) et une plaque de liaison (422) ; la plaque de liaison (422) est reliée de manière rotative au cadre latéral (33) par l'intermédiaire d'un second arbre rotatif (423) ; la plaque de liaison (422) est reliée à l'élément de verrouillage (41) par l'intermédiaire de l'ensemble de transmission (43) ; une articulation entre la plaque de liaison (422) et l'ensemble de transmission (43) et la pédale (421) sont situées respectivement sur deux côtés du second arbre rotatif (423) ; un intervalle (332) est prévu à une partie inférieure du cadre latéral (33) ; une partie de la plaque de liaison (422) s'étend dans le cadre latéral (33) à travers l'intervalle (332) ; dans un état de rappel de la pédale (421), un côté de la plaque de liaison (422) est en butée contre un côté de l'intervalle (332) ; la partie inférieure du cadre latéral (33) comporte un orifice de montage (333) ; et l'orifice de montage (333) communique avec l'intervalle (332).

6. - Porte-vélo pour véhicule selon la revendication 5, **caractérisé par le fait qu'**une extrémité de chacun des deux cadres latéraux (33) à distance de l'élément de verrouillage (41) comporte un élément de liaison (335) ; l'élément de liaison (335) est configuré pour relier les deux cadres latéraux (33) ; un second ressort de rappel (424) est disposé entre l'élément de liaison (335) et la plaque de liaison (422) ; deux extrémités du second ressort de rappel (424) sont reliées respectivement à l'élément de liaison (335) et à la plaque de liaison (422) ; une plaque de renforcement (334) est disposée entre les deux cadres latéraux (33) ; la plaque de renforcement (334) est située sur une surface supérieure du cadre latéral (33) ; la plaque de renforcement (334) est en butée contre le cadre principal (32) lorsque l'élément de verrouillage (41) s'adapte à la broche de fixation (322) ; une première tige de limitation (336) est disposée entre les deux cadre latéraux (33) ; et une trajectoire de rotation de la première tige de limitation (336) autour du premier axe de rotation (321) coupe le cadre principal (32).

7. - Porte-vélo pour véhicule selon la revendication 1, **caractérisé par le fait que** le bras de support (2) comprend un cadre de support (23), un cadre d'extension (24) et un mécanisme de verrouillage de cadre d'extension (25) ; une partie inférieure du cadre de support (23) est reliée à la base (3) ; le cadre d'extension (24) est disposé de manière mobile sur le cadre de support (23) d'une manière pénétrante ; le mécanisme de verrouillage de cadre d'extension (25) comprend un siège fixe (251) et un élément de limitation manuel (252) ; le siège fixe (251) est enfilé sur le cadre de support (23) ; l'élément de limitation manuel (252) est relié de manière mobile au siège fixe (251) ; dans un premier état, l'élément de limitation manuel (252) empêche le cadre d'extension (24) de se déplacer vers le haut et vers le bas par rapport au cadre de support (23) ; et dans un second état, le cadre d'extension (24) est mobile vers le haut et vers le bas par rapport au cadre de support (23).

8. - Porte-vélo pour véhicule selon la revendication 7, **caractérisé par le fait que** le cadre d'extension (24) comporte une bande de fixation (241) ; un élément de limitation (253) est disposé entre l'élément de limitation manuel (252) et la bande de fixation (241) ; la bande de fixation (241) comporte une première rainure de limitation (2411) qui s'adapte à l'élément de limitation (253) ; l'élément de limitation (253) et l'élément de limitation manuel (252) sont des structures divisées ; le cadre de support (23) comporte un premier trou traversant (231) ; l'élément de limitation (253) est disposé dans le premier trou traversant (231) d'une manière pénétrante ; un élément de butée (254) est disposé entre l'élément de limitation (253) et l'élément de limitation manuel (252) ; le siège fixe (251) comporte un canal de guidage (2511) ; le canal de guidage (2511) est concentrique au premier trou traversant (231) ; l'élément de butée (254) est disposé de manière mobile sur le canal de guidage (2511) d'une manière pénétrante ; et les deux extrémités de l'élément de butée (254) sont en butée respectivement contre l'élément de limitation manuel (252) et l'élément de limitation (253).

9. - Porte-vélo pour véhicule selon la revendication 7, **caractérisé par le fait qu'**une section transversale du cadre d'extension (24) comprend un bord inférieur (242), un bord supérieur (243) et des premiers bords latéraux (244) disposés de manière symétrique sur deux côtés du bord inférieur (242) ; deux extrémités du bord inférieur (242) sont respectivement reliées aux extrémités inférieures des premiers bords latéraux (244) sur les deux côtés ; les premiers bords latéraux (244) sont inclinés vers l'extérieur ; des extrémités supérieures des premiers bords latéraux (244) sont reliées au bord supérieur (243) ; deux côtés du bord supérieur (243) comportent, de manière symétrique, des seconds bords latéraux (245) ; deux extrémités du bord supérieur (243) sont respectivement reliées aux extrémités inférieures des seconds bords latéraux (245) sur les deux côtés ; les seconds bords latéraux (245) sont inclinés vers l'intérieur ; des extrémités supérieures des seconds bords latéraux (245) sont respectivement reliées aux extrémités supérieures des premiers bords latéraux (244) ; un point le plus haut du bord supérieur (243) est plus bas que les extrémités supérieures des premiers bords latéraux (244) ; le bord supérieur (243) est parallèle au bord inférieur (242) ; le bord supérieur (243) et les seconds bords latéraux (245) délimitent une cavité de montage (246) ; et la bande de fixation (241) est disposée dans la cavité de montage (246).

10. - Porte-vélo pour véhicule selon la revendication 1, **caractérisé par le fait qu'**il comprend en outre une plaque de poussée coulissante (5), la plaque de poussée coulissante (5) étant configurée pour relier le bras de réception de roue (1) à un sol ; une extrémité du bras de réception de roue (1) comporte une cavité de réception (12) ; la cavité de réception (12) comporte une pièce de liaison (6) ; la pièce de liaison (6) est configurée pour s'étendre et se rétracter par rapport à la cavité de réception (12) ; la plaque de poussée coulissante (5) comporte une structure de liaison qui s'adapte à la pièce de liaison (6) ; et lorsque la plaque de poussée coulissante (5) est reliée au bras de réception de roue (1), la plaque de poussée coulissante (5) forme une rampe.

11. - Porte-vélo pour véhicule selon la revendication 10, **caractérisé par le fait que** la pièce de liaison (6) comporte une seconde rainure de limitation (61) et un crochet de liaison (62) ; la structure de liaison comprend une première fente boucle (51) ; la première fente boucle (51) est située à une extrémité de la plaque de poussée coulissante (5) et s'adapte au crochet de liaison (62) ; la cavité de réception (12) comporte une seconde tige de limitation (121) ; la seconde tige de limitation (121) est disposée d'une manière pénétrante sur la seconde rainure de limitation (61) ; lorsqu'une paroi latérale de la seconde rainure de limitation (61) à distance du crochet de liaison (62) est en butée contre la seconde tige de limitation (121), le crochet de liaison (62) s'étend hors du bras de réception de roue (1) ; et lorsqu'une paroi latérale de la seconde rainure de limitation (61) adjacente au crochet de liaison (62) est en butée contre la seconde tige de limitation (121), le crochet de liaison (62) est reçu dans le bras de réception de roue (1).

12. - Porte-vélo pour le véhicule selon la revendication 10, **caractérisé par le fait que** la plaque de poussée coulissante (5) comprend une plaque de poussée vers le haut (52) et au moins une plaque d'extension (53) ; la plaque de poussée vers le haut (52) et une plaque d'extension adjacente (53) sont reliées par un ensemble de liaison (54) ; la première fente boucle (51) est disposée sur la plaque de poussée vers le haut (52) ; l'ensemble de liaison (54) comprend un élément de fixation (541) et un élément d'attache (542) qui s'adaptent l'un à l'autre pour le verrouillage ; la plaque de poussée vers le haut (52) comporte un premier trou de montage ou une première fente de montage (521) ; la plaque d'extension (53) comporte des seconds trous de montage (531) ; l'élément de fixation (541) est disposé sur le premier trou de montage ou fente de montage (521) et dans les seconds trous de montage (531) d'une manière pénétrante ; la plaque de poussée vers le haut (52) et la plaque d'extension (53) sont reliées de manière fixe par l'élément d'attache (542) ; les seconds trous de montage (531) sont respectivement disposés à deux extrémités de la plaque d'extension (53) ; et une fente de réglage (532) est disposée entre les deux seconds trous de montage (531).
